# EUROPEAN PATENT APPLICATION

(11) **EP 4 563 504 A1**
(43) Date of publication of application: **04.06.2025**
(21) Application number: 23857762.1
(22) Date of filing: 24.08.2023
(51) Int. Cl.: B65G 47/90, B65G 47/26, B65G 47/88, B65G 47/82, B65G 47/57

(54) **TUBE TRANSPORT DEVICE AND PRODUCTION AUTOMATION SYSTEM INCLUDING TUBE TRANSPORT DEVICE**

(30) Priority: 24.08.2022 KR 20220106293; 02.11.2022 KR 20220144779
(71) Applicant: Seegene, Inc., Seoul 05548 (KR)
(72) Inventor: HAN, Yoo Jun, Anyang-si, Gyeonggi-do 14044 (KR); CHO, Deog Pill, Seoul 08018 (KR); JEONG, Won Seok, Seoul 08719 (KR); LIM, Hyun Jin, Seoul 06927 (KR)
(74) Representative: Beck & Rössig European Patent Attorneys
(86) International application number: PCT/KR2023/012593
(87) International publication number: WO 2024/043730

(57) **Abstract**

A tube transport device may include: a first conveyor on which a tube is transported; a second conveyor located at a lower level than the first conveyor; and a slide structure which is located between the first conveyor and the second conveyor and includes a guiding body which guides a tube provided on the first conveyor to slide down and a control unit which controls the slid-down tube to be selectively provided to the second conveyor.

## Description

### BACKGROUND

### 1. FIELD

Embodiments relate generally to an apparatus for transferring a tube and an automated production system including an apparatus for transferring a tube. More particularly, embodiments of the present inventive concept relate to an apparatus for transferring a tube including a slide structure, an apparatus for transferring a tube including a transferring structure, and an automated production system including the same.

### 2. DESCRIPTION OF THE RELATED ART

In an automated production system, an apparatus for transferring a tube may transfer a tube of a half-finished product state to a plurality of process devices through the conveyor so that the tube is produced in a complete product.

For example, after the tube of the half-finished product state undergoes a vision inspection in a vision inspection process device that selects a good product or a defective product, the tube that has undergone the vision inspection may be provided on a conveyor so as to transfer to a labelling process device that attaches a label to the tube. Depending on the type of the labelling process devices, the tube may be labelled in a state where the tube is stood, a state where the tube is lied, or a state where the tube is inclined. When the labelling process device is a device labelling the tube in a state where the tube is inclined, the tube provided to the conveyor (i.e., a first conveyor) should be transferred to a conveyor (i.e., a second conveyor) capable of inclining the tube. Here, the tube is dropped from the first conveyor located at a relatively high level into the second conveyor located at a relatively low level, and in this process, there is a problem that the dropped tube is not accurately positioned on the second conveyor, the dropped tube is lost outside the second conveyor, or the dropped tube is damaged. In addition, the tube may accommodate a relatively small amount of a solution, and a portion of the solution accommodated in the tube may stick to a tube cap due to an impact of the drop. In this case, when a user of the tube removes the tube cap, a relatively large amount of the solution may be lost relative to a total volume of the solution.

In addition, after the tube of the half-finished product state undergoes a labelling process, the tube may be provided to a storage through a transferring device. Here, the storage may include a lattice-shaped wall, and a plurality of spaces are defined by the wall. the tube may be provided in each of the spaces. Meanwhile, in a manufacturing process of the storage, an interval between the walls may be uneven due to manufacturing defects, and the tubes may be gripped in an uneven interval from each other while the transferring device grips the tubes. In this case, an upper surface of the wall of the storage may be in contact with the tube in a process where the tube is provided to the storage through the transferring device, and the wall of the storage is deformed by a descending force of the transferring device (or the tube is damaged). In addition, a problem where the tube is lost outside the storage may occur.

### SUMMARY

An object of a first invention provides an apparatus for transferring a tube including a sliding structure.

An object of a second invention provides an apparatus for transferring a tube including a transferring structure.

However, the first and second inventions are not limited to the objects described above, and may be expanded in various ways without departing from the spirit and scope of the first and second inventions.

In order to achieve the object of the first invention described above, an apparatus for transferring a tube according to exemplary embodiments of the first invention includes a first conveyor where a tube is transferred, a second conveyor located at a lower level than the first conveyor, and a sliding structure including a guiding body positioned between the first conveyor and the second conveyor and guiding the tube provided in the first conveyor so that the tube is slid down and a controller configured to control so that the tube that is slid down is selectively provided to the second conveyor.

In exemplary embodiments, the guiding body may include a first guiding body where a first supporting portion having a predetermined curvature is formed and a second guiding body disposed spacing apart from the first guiding body and where a second supporting portion having the predetermined curvature is formed. The tube may be slid down through a space spaced apart between the first guiding body and the second guiding body while the tube is supported by the first and second supporting portions.

In exemplary embodiments, the tube may be a cylindrical tube, and the tube may include a protrusion formed on a side. The tube may be slid down while the protrusion is in contact with the first and second supporting portions.

In exemplary embodiments, the sliding structure may further include a first stopper disposed adjacent to a first position of the guiding body and configured to operate in a closed state and an open state based on a first signal.

In exemplary embodiments, when the first stopper is the closed state, the first stopper may support the slid-down tube located at the first position so that the slid-down tube located at the first position is not provided to the second conveyor. When the first stopper is the open state, the first stopper may be spaced apart from the slid-down tube located at the first position so that the slid-down tube located at the first position is provided to the second conveyor through a release portion of the guiding body.

In exemplary embodiments, the sliding structure may further include a first sub-stopper positioned adjacent to the first stopper and operating in synchronization with the first stopper. The first stopper may support an upper portion of the slid-down tube located at the first position, and the first sub-stopper may support a lower portion of the slid-down tube located at the first position.

In exemplary embodiments, the sliding structure may further include a second stopper disposed adj acent to a second position of the guiding body and configured to operate in a closed state and an open state based on a second signal.

In exemplary embodiments, when the first stopper is the open state and is the closed state in a state where the slid-down tube located at the first position is placed, the second stopper may be the closed state, and the second stopper may support the slid-down tube located at the second position so that the slid-down tube located at the second position is not provided to the first position. When the first stopper is the closed state in a state where the tube is not placed at the first position, the second stopper may be the open state, and the second stopper may be spaced apart from the sild down tube located at the second position so that the sild down tube located at the second position is provided to the first position.

In exemplary embodiments, the sliding structure may further include a second sub-stopper positioned adjacent to the second stopper and operating in synchronization with the second stopper. The second stopper may support an upper portion of the slid-down tube located at the second position, and the second sub-stopper may support a lower portion of the slid-down tube located at the second position.

In exemplary embodiments, the sliding structure may further include a first detecting sensor disposed at the first position and generating a first detecting signal by detecting presence or absence of the tube located at the first position and a second detecting sensor disposed at the second position and generating a second detecting signal by detecting presence or absence of the tube located at the second position. The controller may generate the first and second signals based on the first and second detecting signals.

In exemplary embodiments, an upper surface of the first conveyor facing a lower surface of the tube may be parallel to a ground, and the upper surface of the second conveyor that is in contact with the tube may be inclined at a predetermined angle with respect to the ground.

In exemplary embodiments, the upper surface of the first conveyor may face a lower surface of the tube so that the tube is stood, and the upper surface of the second conveyor may be in contact with a side surface of the tube so that the tube is inclined at a predetermined angle.

In exemplary embodiments, the apparatus may further include a delivering member configured to move between a release portion of the first conveyor and an input portion of the guiding body and moving the tube provided from the release portion of the first conveyor so that the tube provided from the release portion of the first conveyor is positioned in an input portion of the guiding body.

In exemplary embodiments, the delivering member may include an opening having a shape surrounding at least a part of the tube, and the delivering member may transfer the tube placed in the opening from the release portion of the first conveyor to the input portion of the guiding body in a state where the tube provided from the release portion of the first conveyor is placed in the opening.

In exemplary embodiments, the apparatus may further include a third stopper disposed adjacent to the release portion of the first conveyor on the first conveyor and operating in a closed state and an open state.

In exemplary embodiments, when the tube is placed in the opening of the delivering member positioned in the release portion of the first conveyor, the third stopper may be closed state. When the tube is not placed in the opening of the delivering member positioned in the release portion of the first conveyor, the third stopper may be the open state.

In exemplary embodiments, the apparatus may further include a push member pushing the tube so that the tube placed in the input portion of the guiding body is slid down.

In exemplary embodiments, the apparatus may further include a third detecting sensor disposed at a third position of the guiding body and generating a third detecting signal by detecting whether the tube is placed at a third position for a predetermined period of time or more. When the controller detects the third signal, the third stopper may be maintained in the closed state.

In exemplary embodiments, the guiding body may have a fan shape, and the tube may be slid down along an arc of the fan shape.

In exemplary embodiments, a direction where the tube is moved in the first conveyor may be different from a direction where the tube is moved in the second conveyor.

In exemplary embodiments, the second conveyor may include a plurality of rollers. The tube released from the guiding body may be provided between adjacent two rollers among the rollers.

In order to achieve the object of the first invention described above, an apparatus for transferring a tube according to exemplary embodiments of the first invention includes a first conveyor where a tube is transferred, a second conveyor located at a lower level than the first conveyor, and a sliding structure including a guiding body positioned between the first conveyor and the second conveyor and guiding the tube provided in the first conveyor so that the tube is slid down, a first stopper disposed adjacent to a first position of the guiding body and configured to operate in (i) a closed state that supports the tube placed at the first position of the guiding body and (ii) an open state that does not support the tube placed at the first position of the guiding body based on a first signal, a first sub-stopper positioned adjacent to the first stopper and operating in the same manner as the first stopper, a second stopper disposed adjacent to a second position of the guiding body and configured to operate in (i) a closed state that supports the tube placed at the second position of the guiding body and (ii) an open state that does not support the tube placed at the second position of the guiding body based on a second signal, a second sub-stopper positioned adjacent to the second stopper and operating in the same manner as the second stopper, and a controller configured to control so that the tube that is slid down is selectively provided to the second conveyor based on the first and second signals.

In order to achieve the object of the second invention described above, an apparatus for transferring a tube according to exemplary embodiments of the second invention includes a conveyor feeding a tube, an alignment structure aligning the tube fed from the conveyor, a storage where the tube is stored, a transferring structure including a body, an upper supporting member spaced apart from the body by a first distance, an upper elastic member disposed between the body and the upper supporting member and maintaining the first distance between the body and the upper supporting member, a gripper connected to the upper supporting member and gripping the tube, a shaft member connected to the upper supporting member and extending in a first direction, and a first detecting sensor fixed to a surface of the body and detecting a shaft member, and a controller configured to control the transferring structure that operates in a first operation mode where the tube aligned by the alignment structure is gripped and a second operation mode where the gripped tube is provided to the storage.

In exemplary embodiments, a circumferential groove may be formed in a side surface of the shaft member. The first detecting sensor may detect the circumferential groove or detects a side surface of the shaft member located adjacent to the circumferential groove.

In exemplary embodiments, when the first detecting sensor detects the side surface of the shaft member, the first detecting sensor may generate a side surface detecting signal, and the side surface detecting signal may be transmitted to the controller.

In exemplary embodiments, the apparatus may further include a discharge part. The controller may be configured to further control the transferring structure that operates in a third action mode where the gripped tube is provided to the discharge part when the upper supporting member is moved in the first direction in the second operation mode.

In exemplary embodiments, the storage may include a lattice-shaped wall, and a plurality of spaces are defined by the wall. The tube may be provided to the spaces when the transferring structure is normally operated. When an upper surface of the wall of the storage is in contact with the tube while the transferring structure is descended in a second direction on the storage by the controller, the tube may be pressurized from the wall, and the upper supporting member may move in the first direction by a predetermined distance. As the upper supporting member moves, the upper elastic member may be compressed, and the shaft member may move in the first direction. The first detecting sensor may detect the side surface of the shaft member and generate a side surface detecting signal. When the controller receives the side surface detecting signal, the controller may detect an abnormal operation, and the controller may be configured to control the transferring structure so that the transferring structure provides the tube to the discharge part.

In exemplary embodiments, the apparatus may further include a lower supporting member spaced apart from the upper supporting member by a second distance and a lower elastic member disposed between the upper supporting member and the lower supporting member and maintaining the second distance between the upper supporting member and the lower supporting member.

In exemplary embodiments, while the transferring structure is descended in a second direction on the storage by the controller, the lower supporting member may be pressurized from the tube in the first operation mode, and then the lower supporting member may move in the first direction by a predetermined distance. As the lower supporting member moves, the controller may be configured to control the transferring structure so that the gripper grips the tube in a state where the lower supporting member is compressed.

In exemplary embodiments, while the transferring structure is moved onto the storage by gripping the tube aligned in the alignment structure, the lower supporting member may support an upper surface of the tube in a state where the lower elastic member is pressurized so that the tube does not shake.

In exemplary embodiments, the controller may be configured to control the transferring structure in the second operation mode so that the gripper is spaced apart from the tube, and as the compressed lower elastic member is restored by elastic force, the lower supporting member may move in the second direction by the predetermined distance. The tube may be provided to the storage by being pressurized from the lower supporting member.

In exemplary embodiments, the gripper may include a first gripper panel and a second gripper panel facing the first gripper panel, and the gripper may grip the tube when a distance between the first and second gripper panels is decreased in the first operation mode, and the tube may be spaced apart from the gripper and when the distance between the first and second gripper panels is increased in the second mode.

In exemplary embodiments, the lower supporting member may be positioned between the first and second gripper panels, and a lower surface of the lower supporting member may be in contact with an upper surface of the tube while the transferring structure moves from the alignment structure onto the storage.

In exemplary embodiments, the alignment structure may include an upper member where a recess portion recessed from a side surface into an inner side is formed. The tube fed from the conveyor may be provided to the recess portion.

In exemplary embodiments, the apparatus may further include a stopper disposed adjacent to a release portion of the conveyor and operating in an open state where the tube placed in the conveyor is provided to the recess portion of the upper member and a closed state where the tube is not provided to the recess portion of the upper member, second detecting sensors arranged adjacent to the release portion of the conveyor and detecting at least three tubes arranged adjacent to the stopper, and a delivering member disposed adjacent to the conveyor and delivering the at least three tubes to the recess portion of the upper member.

In exemplary embodiments, the tubes may be collected to the release portion of the conveyor in the closed state of the stopper, and the stopper may be changed in the open state after the second detecting sensors detect the at least three tubes. The delivering member may provide the at least three tubes to the recess portion of the upper member in the open state of the stopper.

In exemplary embodiments, the recess portion may have an opened shape in a portion that faces the release portion of the conveyor, and the at least three tubes may be provided to the recess portion through the opened portion.

In exemplary embodiments, the alignment structure may further include a guider disposed between adjacent tubes among the at least three tubes so that at least three tubes provided to the recess portion are spaced apart from each other by a determined interval.

In exemplary embodiments, the tube may be a cylindrical tube, and a body of the tube may be sealed with a lid. The gripper may grip the lid.

In order to achieve the object of the second invention described above, an apparatus for transferring a tube according to exemplary embodiments of the second invention includes a conveyor feeding tubes, an alignment structure aligning the tube fed from the conveyor and including an upper member where a recess portion recessed from a side surface into an inner side and in which the tubes fed from the conveyor are placeable is formed and a guider disposed between adjacent two tubes among the tubes so that the tubes are spaced apart from each other by a determined interval, a storage where the tubes are stored, a transferring structure including a body and grippers connected to the body and disposed spaced apart from each other to grip the tubes disposed spaced apart from each other by the predetermined interval, and a controller configured to control the transferring structure that operates in a first operation mode where the tubes aligned by the alignment structure are gripped and a second operation mode where the gripped tubes are provided to the storage.

In exemplary embodiments, the alignment structure may further include an elevating member elevating the tubes spaced apart from each other by the predetermined interval.

In exemplary embodiments, the apparatus may further include a stopper disposed adjacent to a release portion of the conveyor and operating in an open state where the tubes placed in the conveyor are provided to the recess portion of the upper member and a closed state where the tube is not provided to the recess portion of the upper member, detecting sensors arranged adjacent to the release portion of the conveyor and detecting at least three tubes arranged adjacent to the stopper, and a delivering member disposed adjacent to the conveyor and delivering the at least three tubes to the recess portion of the upper member.

In exemplary embodiments, the tubes may be collected to the release portion of the conveyor in the closed state of the stopper, and the stopper may be changed to the open state after the detecting sensors detect the at least three tubes. The delivering member may provide the at least three tubes to the upper member in the open state of the stopper, and the at least three tubes may be spaced apart from each other by the predetermined interval through the guider of the alignment structure. The at least three tubes spaced apart from each other by the predetermined interval may be elevated through the elevating member of the alignment structure.

In exemplary embodiments, the recess portion may have an opened shape in a portion that faces the release portion of the conveyor, and the at least three tubes may be provided to the recess portion through the opened portion.

In exemplary embodiments, each of the grippers may include a first gripper panel and a second gripper panel facing the first gripper panel. The gripper may grip the tubes spaced apart from each other by the predetermined interval when a distance between the first and second gripper panels is decreased in the first operation mode, and each of the tubes may be spaced apart from each of the grippers when the distance between the first and second gripper panels is increased in the second mode.

In exemplary embodiments, the tube may be a cylindrical tube, and a body of the tube may be sealed with a lid. The gripper may grip a side surface of the tube.

In order to achieve the object of the second invention described above, an apparatus for transferring a tube according to exemplary embodiments of the second invention includes a conveyor feeding tubes, an alignment structure (i) including an upper member where a recess portion recessed from a side surface into an inner side and in which the tubes fed from the conveyor are placeable is formed and a guider disposed between adjacent two tubes among the tubes so that the tubes are spaced apart from each other by a determined interval and (ii) aligning the tubes through the upper member and the guider, a storage where the tubes are stored, a transferring structure including a body, an upper supporting member spaced apart from the body by a first distance, an upper elastic member disposed between the body and the upper supporting member and maintaining the first distance between the body and the upper supporting member, grippers connected to the upper supporting member and disposed spaced apart from each other to grip the tubes spaced apart from each other by the predetermined interval, a shaft member connected to the upper supporting member and extending in a first direction, a detecting sensor fixed to a surface of the body and detecting a shaft member, a lower supporting member spaced apart from the upper supporting member by a second distance, and a lower elastic member disposed between the upper supporting member and the lower supporting member and maintaining the second distance between the upper supporting member and the lower supporting member, and a controller configured to control the transferring structure that operates in a first operation mode where the tubes aligned by the alignment structure are gripped and a second operation mode where the gripped tubes are provided to the storage.

As the apparatus for transferring a tube according to exemplary embodiments of the first invention includes the sliding structure, the tube may be slid down without falling when the tube provided in the first conveyor located at a relatively high level moves to the second conveyor located at a relatively low level. Accordingly, since the tube does not fall, the tube may not be damaged by impact when falling or may not be lost to the outside of the second conveyor. In addition, a solution accommodated in the tube may not stick to the lid of the tube due to the impact when falling, so that a relatively large amount of the solution may not be lost.

In addition, as the sliding structure includes the controller, the controller may control so that the tube is selectively provided to the second conveyor. Accordingly, since the controller may accurately position the tube between adjacent two rollers among a plurality of the rollers included in the second conveyor, labelling defects for the tube may not occur in the labelling process.

Further, as the apparatus for transferring a tube according to exemplary embodiments of the first invention includes the third detecting sensor, the controller may control so that the tube is selectively provided to the guiding body. Accordingly, the controller may prevent the tube from being over-provided to the guiding body.

As the apparatus for transferring a tube according to exemplary embodiments of the second invention includes the controller and the transferring structure, the apparatus may detect that the operation of the transferring structure is abnormal. Accordingly, the storage may not be deformed by a descending force of the transferring structure, and the tube may not be damaged. The tube may not be lost to the outside of the storage.

In addition, when the transferring structure is abnormally operated, the transferring structure may be operated in the third operation mode through the controller 300. In this case, although the transferring structure is abnormally operated, the transferring structure may grip the tubes placed in the recess portion of the alignment structure after the tubes gripped by the gripper is released to the discharge part. Accordingly, an automated production system may be implemented without stopping a process through the apparatus.

In addition, as the apparatus for transferring a tube according to exemplary embodiments of the second invention includes the alignment structure, the tubes may be spaced apart by the predetermined interval through the guider of the alignment structure, and may be accurately provided to the spaces of the storage.

Further, as the apparatus for transferring a tube according to exemplary embodiments of the second invention includes the lower supporting member, an upper surface of the tubes each placed in the recess portion of the alignment structure may be supported from a lower surface of the lower supporting member. Accordingly, the tubes may be transferred without a shake of the tube in a state where an interval of the tubes is maintained while the transferring structure is moved.

However, the effects of the first and second inventions are not limited to the effects described above, and may be expanded in various ways without departing from the spirit and scope of the first and second inventions.

### BRIEF DESCRIPTION OF THE DRAWINGS

FIGS. 1, 2, 3, and 4 are diagrams illustrating an apparatus for transferring a tube according to exemplary embodiments of a first invention.
FIGS. 5, 6, 7, 8, 9, and 10 are partially enlarged views illustrating a sliding structure, a third stopper, third, fourth, and fifth detecting sensors, a second conveyor, a push member, and a delivering member included in the apparatus for transferring the tube of FIG. 1.
FIGS. 11 and 12 are partially enlarged views for describing the sliding structure included in the apparatus for transferring the tube of FIG. 1.
FIG. 13 is a partially enlarged view for describing a tube transferred through the apparatus for transferring the tube of FIG. 1 and first and second blocking members included in the sliding structure of FIG. 12.
FIG. 14 is a block diagram for describing a controller included in the sliding structure of FIG. 5.
FIG. 15 is a flow chart illustrating a method of transferring a tube of the apparatus according to exemplary embodiments of the first invention.
FIG. 16 is a diagram illustrating an apparatus for transferring a tube according to exemplary embodiments of a second invention.
FIG. 17 is a perspective view illustrating an alignment structure included in the apparatus for transferring the tube of FIG. 16.
FIG. 18 is a schematic diagram for describing an operation of the alignment structure of FIG. 17.
FIGS. 19, 20, 21, 22, 23, 24, and 25 are diagrams illustrating a transferring structure included in the apparatus for transferring the tube of FIG. 16.
FIG. 26 is a block diagram for describing a controller included in the apparatus for transferring the tube of FIG. 16.
FIG. 27 is a diagram for describing a tube transferred through the apparatus for transferring the tube of FIG. 16.
FIG. 28 is a flow chart illustrating a method of transferring a tube of the apparatus according to exemplary embodiments of the second invention.
FIGS. 29, 30, 31, 32, 33, 34, 35, 36, and 37 are schematic diagrams for describing the method of transferring the tube of the apparatus of FIG. 28.
FIG. 38 is a perspective view illustrating an apparatus for transferring a tube according to exemplary embodiments of a second invention.
FIGS. 39 and 40 are schematic diagrams for describing an operation of an alignment structure of FIG. 38.

### DETAILED DESCRIPTION OF THE EMBODIMENTS

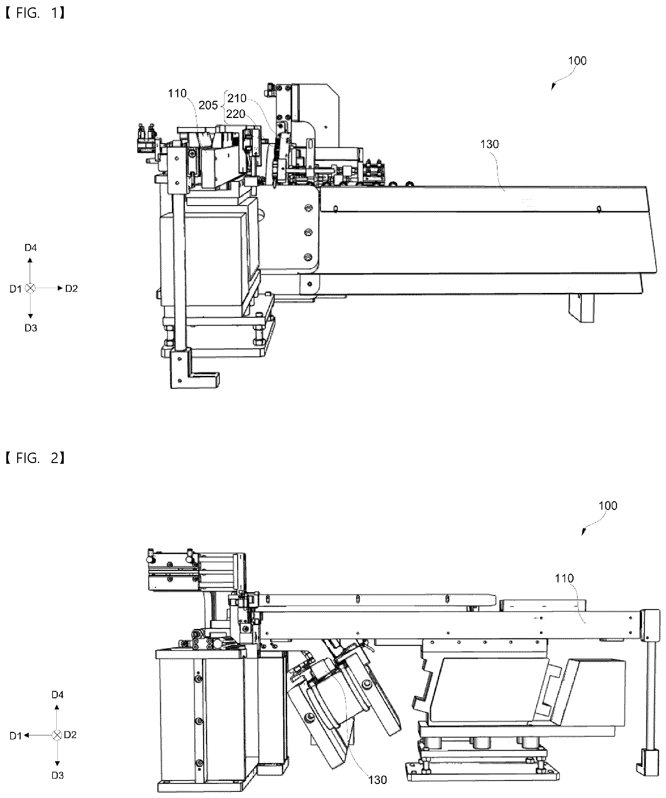

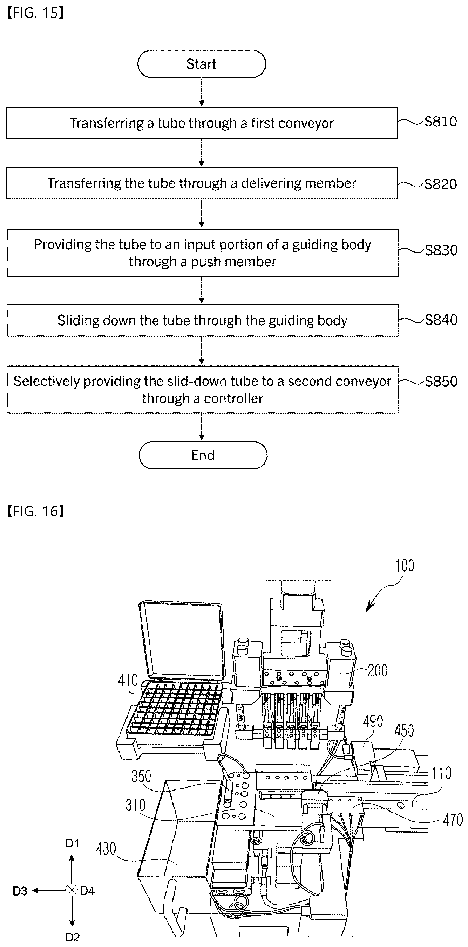

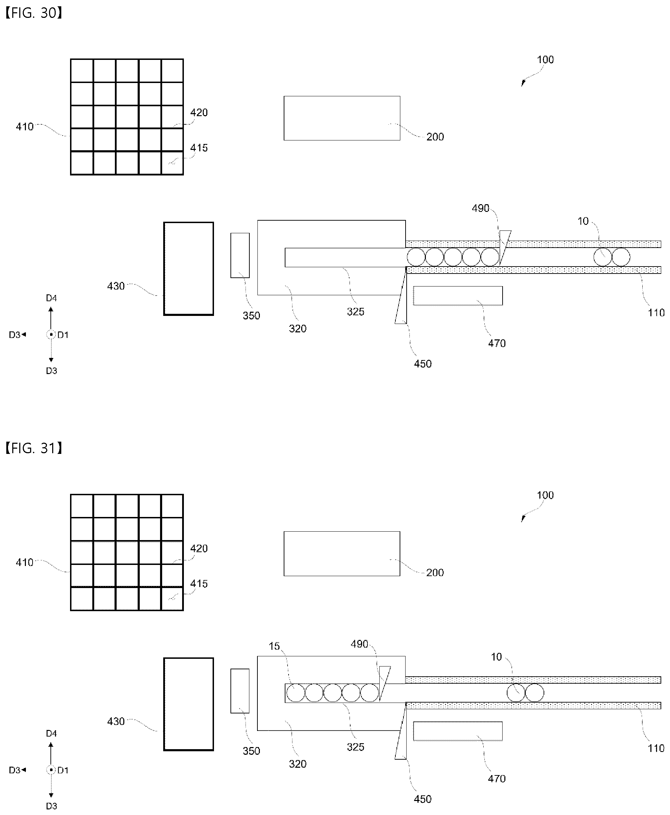

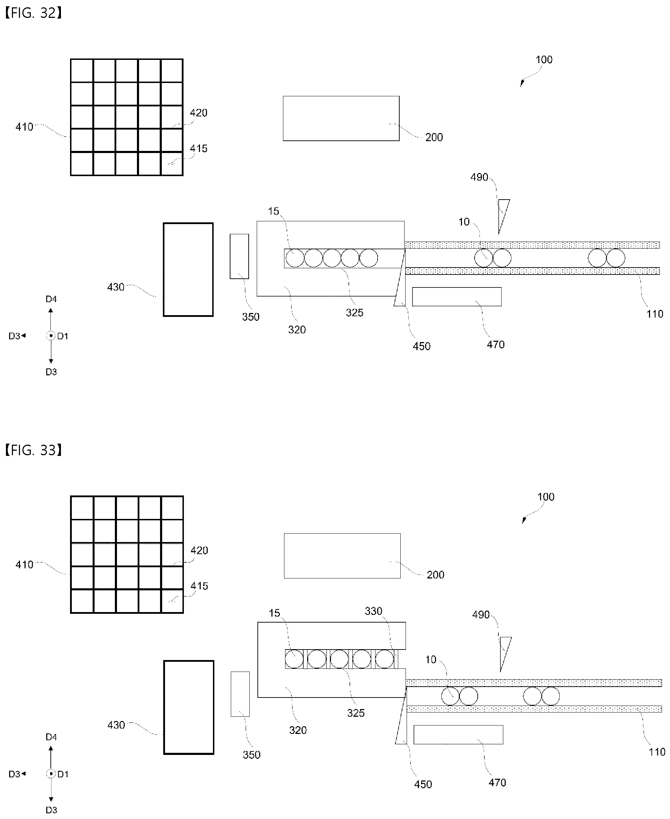

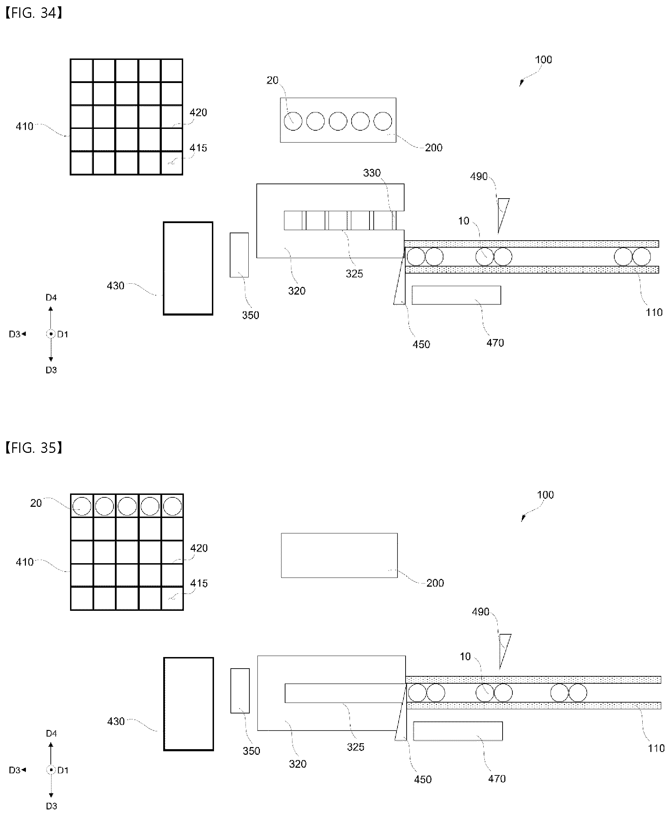

A first invention corresponds to FIGS. 1 to 15, and a second invention corresponds to FIGS. 16 to 40. Hereinafter, an apparatus for transferring a tube according to exemplary embodiments of the first and second inventions will be described in detail with reference to the accompanying drawings. In the accompanying drawings, reference numerals used in the first invention and reference numerals used in the second invention may be the same, but they may be different components. That is, the first invention should be interpreted only within FIGS. 1 to 15, and the second invention should be interpreted only within FIGS. 16 to 40.

In present disclosure, specific structural and functional descriptions are merely exemplified for the purpose of explaining embodiments of the first and second inventions, and the embodiments of the first and second inventions may be implemented in various forms and are not construed as being limited to the embodiments described in the present disclosure, but should be understood to include all modifications, equivalents, and substitutes included in the spirit and technical scope of the first and second inventions. When a component is described as being "connected" or "in contact with" another component, it should be understood that it may be directly connected or in contact with the other component, but another component may exist in between. In addition, when a component is described as being "directly connected" or "in direct contact with" another component, it may be understood that there is no another component in between. Other expressions describing the relationship between components, such as "between" and "directly between" or "adjacent to" and "directly adjacent to", may be interpreted in the same way.

The terminology used in the first and second inventions is for the purpose of describing embodiments only and is not intended to be limiting of the first and second inventions. The singular expression includes the plural expression unless the context clearly indicates otherwise. In the present disclosure, it should be understood that the terms "comprise," "include," or "have" are intended to specify the presence of a feature, number, step, operation, component, part, or combination thereof, but do not exclude in advance the possibility of the presence or addition of one or more other features, numbers, steps, operations, components, parts, or combinations thereof. Unless otherwise defined, all terms used herein, including technical or scientific terms, have the same meaning as commonly understood by one of ordinary skill in the art to which this first and second inventions belong.

Terms defined in commonly used dictionaries should be interpreted as having a meaning consistent with their meaning in the context of the relevant art, and will not be interpreted in an idealized or overly formal sense unless expressly defined in the present disclosure.

The terms first, second, and third may be used to describe various components, but these components are not limited by the terms. The terms are used for the purpose of distinguishing one component from another. For example, without departing from the scope of the first and second inventions, the first component may be referred to as the second or third component, and similarly, the second or third component may be referred to interchangeably.

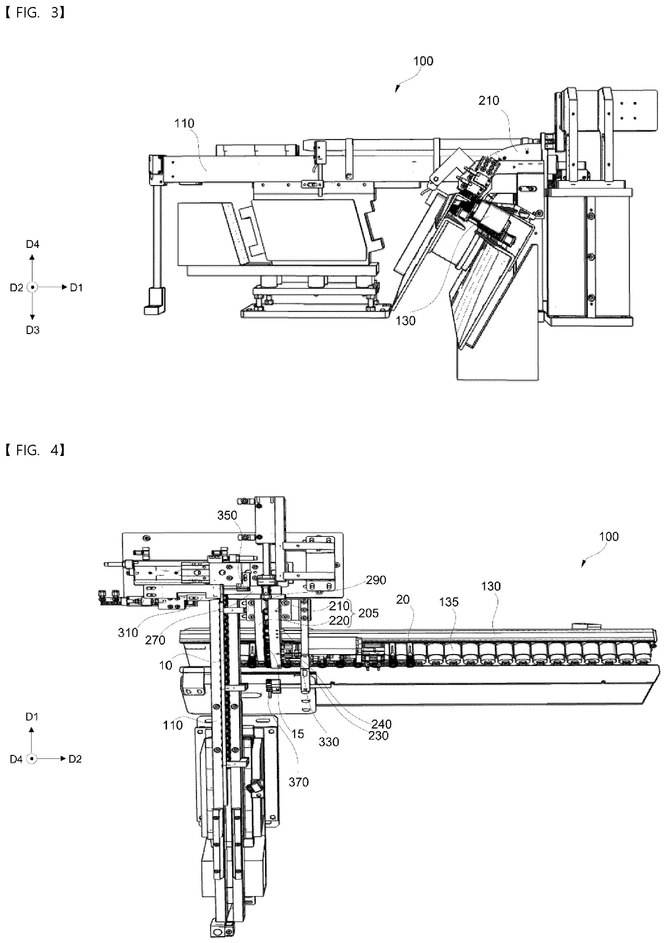

FIGS. 1, 2, 3, and 4 are diagrams illustrating an apparatus for transferring a tube according to exemplary embodiments of a first invention. For example, FIG. 1 is a front view of the apparatus for transferring the tube, and FIG. 2 is a left side view of the apparatus for transferring the tube. FIG. 3 is a right side view of the apparatus for transferring the tube, and FIG. 4 is an upper side view of the apparatus for transferring the tube.

Referring to FIGS. 1, 2, 3, and 4, an apparatus for transferring a tube (refer to as 'apparatus 100' hereinafter) may include a first conveyor 110, a second conveyor 130, a delivering member 270, a push member 290, a third stopper 310, a guiding body 205, a first detecting sensor 230, a second detecting sensor 240, a third detecting sensor 330, a fourth detecting sensor 350, a fifth detecting sensor 370, etc.

After a vision inspection is performed in a vision inspection process device, the apparatus 100 may correspond to a tube transferring device provided so as to move a tube that has undergone the vision inspection to a labelling process device that attaches a label to the tube.

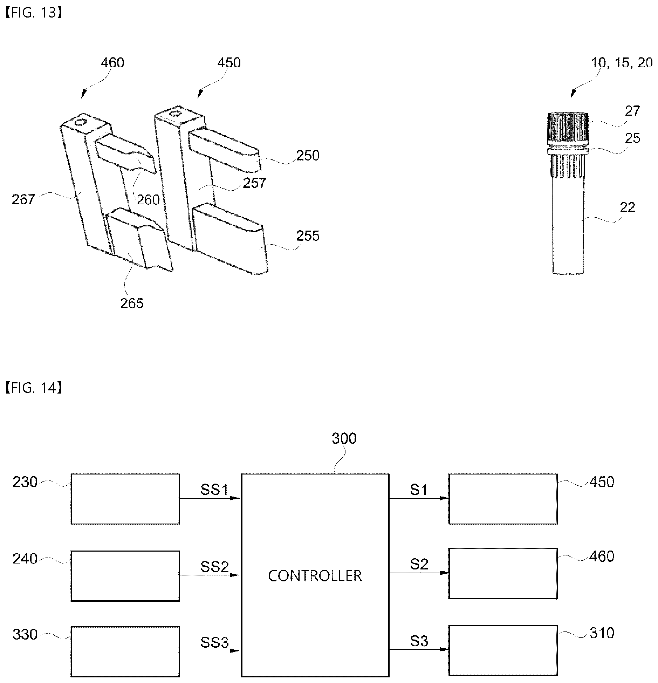

For convenience of explanation, a tube placed in the first conveyor 110 is defined as a tube 10, and a tube placed in the second conveyor 130 is defined as a tube 20. A tube placed in the guiding body 205 is defined as a tube 15. That is, each of the tubes 10, 15, and 20 may have the same shape. In addition, each of the tubes 10, 15, and 20 may include a cylindrical body 22, and a protrusion 25 may be formed in a side surface of the body 22 (e.g., a tube neck). In addition, each of the tubes 10, 15, and 20 may further include a lid 27, and the body 22 may be sealed with the lid 27. Further, a solution of a liquid state may be accommodated in the body 22 (refer to FIG. 13).

For example, the first conveyor 110 may transfer the tube 10 in a first direction D1, and the guiding body 205 may transfer the tube 15 in a direction opposite to the first direction D1. The second conveyor 130 may transfer the tube 20 in a second direction D2. Here, the first direction D1 may be substantially perpendicular to the second direction D2. In addition, the vision inspection process device may be positioned spaced apart from the apparatus 100 in a direction that is opposite to the second direction D2, and the vision inspection process device may be positioned adjacent to the first conveyor 110 so that the tube 10 that has undergone the vision inspection process may be fed to the first conveyor 110. Further, the labelling process device may be positioned spaced apart from the apparatus 100 in the second direction D2, and the labelling process device may be positioned adjacent to the second conveyor 130 so that a labelling process may be performed in the tube 20 in a process where the tube 20 is transferred by the second conveyor 130.

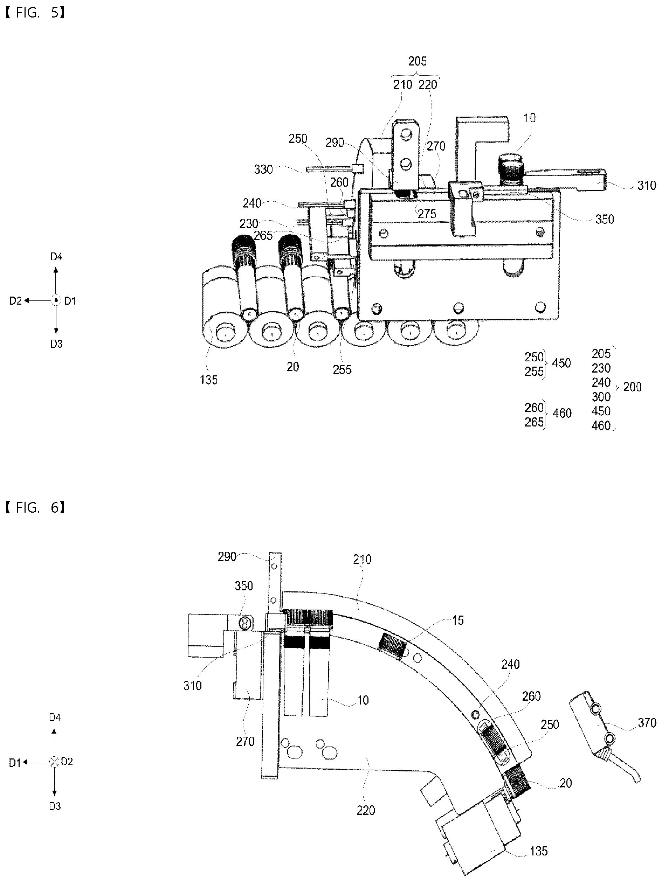

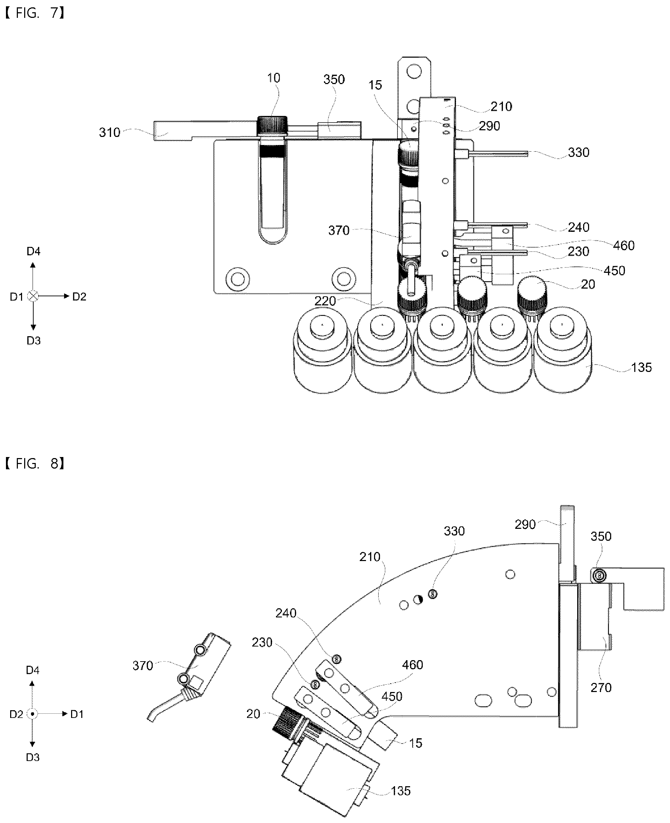

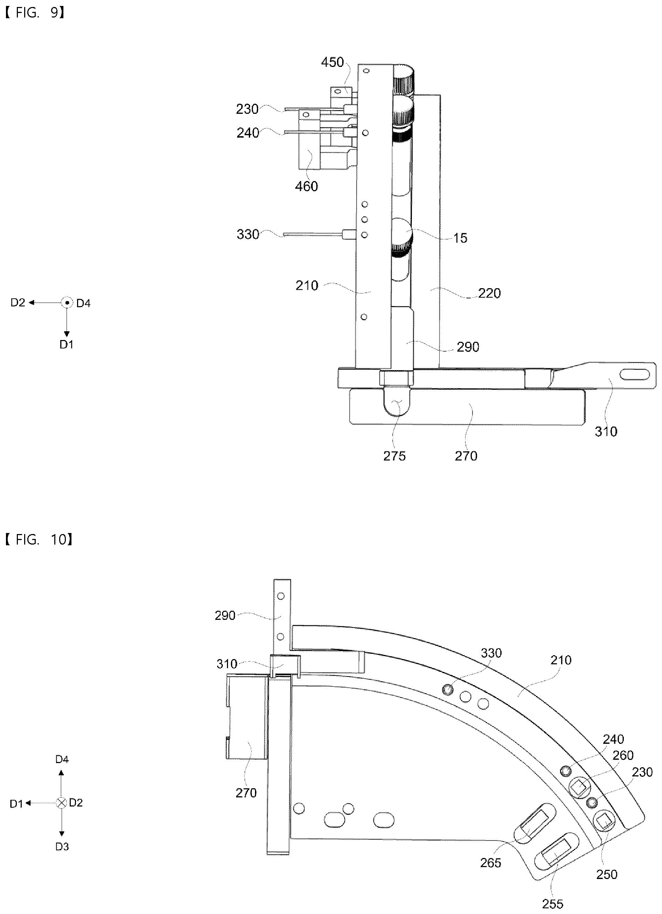

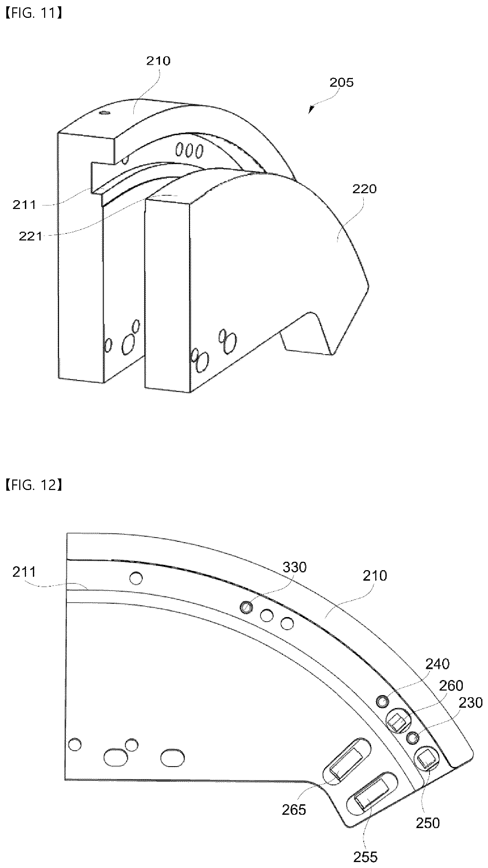

FIGS. 5, 6, 7, 8, 9, and 10 are partially enlarged views illustrating a sliding structure, a third stopper, third, fourth, and fifth detecting sensors, a second conveyor, a push member, and a delivering member included in the apparatus for transferring the tube of FIG. 1, and FIGS. 11 and 12 are partially enlarged views for describing the sliding structure included in the apparatus for transferring the tube of FIG. 1. FIG. 13 is a partially enlarged view for describing a tube transferred through the apparatus for transferring the tube of FIG. 1 and first and second blocking members included in the sliding structure of FIG. 12, and FIG. 14 is a block diagram for describing a controller included in the sliding structure of FIG. 5. For example, FIG. 5 is a back view of the sliding structure, the third stopper, the fourth, and fifth detecting sensors, the second conveyor, the push member, and a delivering member (refer to as a structure herein after), and FIG. 6 is a left side view of the structure. FIG. 7 is a front view of the structure, and the FIG. 8 is a left side view of the structure. FIG. 9 is an upper view of the structure, and FIG. 10 is a diagram where a second body of the sliding structure is removed in the structure of FIG. 6.

Referring to FIGS. 4, 5, 6, 7, 8, 9, 10, 11, 12, 13, and 14, the apparatus 100 may include a first conveyor 110, a second conveyor 130, a sliding structure 200, a delivering member 270, a push member 290, a third stopper 310, a third detecting sensor 330, a fourth detecting sensor 350, a fifth detecting sensor 370, etc. Here, the sliding structure 200 may include a controller 300, a first blocking member 450, a second blocking member 460, a guiding body 205, a first detecting sensor 230, and a second detecting sensor 240, and the guiding body 205 may include a first guiding body 210 and a second guiding body 220. In addition, the first blocking member 450 may include a first stopper 250, a first sub-stopper 255, and a first connecting portion 257, and the second blocking member 460 may include a second stopper 260, a second sub-stopper 265, and a second connecting portion 267. Further, the second conveyor 130 may include a plurality of rollers 135, and the controller 300 may generate a first signal S1, a second signal S2, and a third signal S3.

Referring again to FIGS. 4, 5, 6, 7, 8, 9, 10, and 14, the first conveyor 110 may extend in the first direction D1, and may be positioned at a first level. The first conveyor 110 may transfer the tube 10 in the first direction D1. For example, after the tube of the half-finished product state undergoes a vision inspection in a vision inspection process device that selects a good product or a defective product, the tube that has undergone the vision inspection may be provided in an input portion of the first conveyor 110 through a robot arm so as to transfer to a labelling process device that attaches a label to the tube. The tube 10 provided in the input portion of the first conveyor 110 may be moved to a release portion of the first conveyor 110 along the first direction D1. In exemplary embodiments, an upper surface of the first conveyor 110 facing a lower surface of the tube 10 may be parallel to the ground, and the upper surface of the first conveyor 110 may face the lower surface of the tube 10 so that the tube 10 is stood. In exemplary embodiments, the first conveyor 110 may be a linear feeder, and the lower surface of the tube 10 may be spaced apart from the upper surface of the first conveyor 110. In addition, the tube 10 may be fed through a vibration of the linear feeder, and to transmit the vibration to the tube 10, the first conveyor 110 may include a vibration transmission unit.

The third stopper 310 may be disposed adjacent to the release portion of the first conveyor 110 on the first conveyor 110. The third stopper 310 may operate in a closed state located inside the first conveyor 110 and an open state not located inside the first conveyor 110. In other words, the tube 10 may not be released to the release portion of the first conveyor 110 in the closed state of the third stopper 310, and the tube 10 may be released to the release portion of the first conveyor 110 in the open state of the third stopper 310. The third stopper 310 may include a plastic such as polyether ether ketone (PEEK), polyacrylether ketone (PAEK), polyether imide (PEI), polyether sulfone (PES), etc. In exemplary embodiments, the third stopper 310 may be manufactured using PEEK.

The delivering member 270 may move between the release portion of the first conveyor 110 and an input portion of the guiding body 205. In other words, the delivering member 270 may move in the second direction D2 and a direction opposite to the second direction D2. The delivering member 270 may transfer the tube 10 so that the tube 10 provided from the release portion of the first conveyor 110 is located at the input portion of the guiding body 205. In exemplary embodiments, the delivering member 270 may include an opening 275 having a shape surrounding at least a part of the tube 10. For example, the delivering member 270 may transfer one tube 10 placed in the opening 275 from the release portion of the first conveyor 110 to the input portion of the guiding body 205 in a state where one tube 10 provided from the release portion of the first conveyor 110 is placed in the opening 275. In other words, the delivering member 270 may be located in a first opening position where the opening 275 is adjacent to the release portion of the first conveyor 110 and a second opening position where the opening 275 is adjacent to the input portion of the guiding body 205.

The delivering member 270 may include a metal, an alloy, metal nitride, etc. For example, the delivering member 270 may include the metal such as gold (Au), silver (Ag), aluminum (Al), iron (Fe), zinc (Zn), lead (Nb), tungsten (W), copper (Cu), platinum (Pt), nickel (Ni), titanium (Ti), palladium (Pd), magnesium (Mg), calcium (Ca), lithium (Li), chromium (Cr), tantalum (Ta), molybdenum (Mo), scandium (Sc), neodymium (Nd), iridium (Ir), etc, the alloy such as an aluminum-containing alloy, a silver-containing alloy, a copper-containing alloy, a molybdenum-containing alloy, etc, and the metal nitride such as aluminum nitride (AlNₓ), tungsten nitride (WNₓ), titanium nitride (TiNₓ), chromium nitride (CrNₓ), tantalum nitride (TaNₓ), etc. In exemplary embodiments, the delivering member 270 may include Al.

Alternatively, the apparatus 100 may further include a first position detecting sensor and a second position detecting sensor. For example, the first position detecting sensor may detect whether the delivering member 270 is accurately located at the first opening position, and the second position detecting sensor may detect whether the delivering member 270 is accurately located at the second opening position.

In exemplary embodiments, when the tube 10 is placed in the opening 275 of the delivering member 270 located at the first opening position, the third stopper 310 may be the closed state. In addition, when the tube 10 is not placed in the opening 275 of the delivering member 270 located at the first opening position, the third stopper 310 may be the open state.

The fourth detecting sensor 350 may be disposed on the delivering member 270. For example, the fourth detecting sensor 350 may be fixed to an upper surface of the delivering member 270, and the fourth detecting sensor 350 together with the delivering member 270 may move in the second direction D2 and a direction opposite to the second direction D2. In addition, the fourth detecting sensor 350 may be spaced apart from the opening 275 of the delivering member 270 in the direction opposite to the second direction D2. In exemplary embodiments, the fourth detecting sensor 350 may detect presence or absence of the tube 10 placed in the opening 275 of the delivering member 270 disposed in the first opening position, and the fourth detecting sensor 350 may detect the presence or absence of the tube 10 placed in the opening 275 of the delivering member 270 disposed in the second opening position. The fourth detecting sensor 350 may be a laser detecting sensor that detects the presence or absence of the tube 10 using a laser.

The push member 290 may be positioned adjacent to the input of the guiding body 205 on the delivering member 270. The push member 290 may move in the first direction D1 and a direction opposite to the first direction D1. The push member 290 may operate in a forward state where it moves forward toward the input portion of the guiding body 205 and a backward state where it moves backward from the input portion of the guiding body 205. In other words, while the delivering member 270 is located at the first opening position, the push member 290 may be the backward state, and the push member 290 may be the forward state pushing the tube 10 so that the tube 10 is slid down through the guiding body 205 after the delivering member 270 together with the tube 10 placed in the opening 275 is located at the second opening position. The push member 290 may include a metal, an alloy, metal nitride, etc. In exemplary embodiments, the push member 290 may be manufactured using Al.

In some exemplary embodiments, the controller 300 may control an operation of each of the third stopper 310, the delivering member 270, and the push member 290 by receiving a detecting signal from the fourth detecting sensor 350. For example, after the third stopper 310 is the closed state and the delivering member 270 is located at the first opening position, the fourth detecting sensor 350 may detect the absence of the tube 10 in the opening 275 of the delivering member 270. When fourth detecting sensor 350 detects the absence of the tube 10 in the opening 275 of the delivering member 270, the controller 300 may change the third stopper 310 to the open state, and the tube 10 may be provided from the release portion of the first conveyor 110 to the opening 275 of the delivering member 270. When the fourth detecting sensor 350 detects the presence of the tube 10 in the opening 275 of the delivering member 270 after the tube 10 is provided from the release portion of the first conveyor 110 to the opening 275 of the delivering member 270, the controller 300 changes the third stopper 310 to the closed state, and then the controller 300 may position the delivering member 270 in the second opening position. After the delivering member 270 is located at the second opening position, the fourth detecting sensor 350 may detect the presence of the tube 10 in the opening 275 of the delivering member 270. When the fourth detecting sensor 350 detects the presence of the tube 10 in the opening 275 of the delivering member 270, the controller 300 may operate the push member 290 in the forward state, and the push member 290 may push the tube 10 into the input portion of the guiding body 205.

The second conveyor 130 may be disposed adjacent to a release portion of the guiding body 205, and may extend in the second direction D2. The second conveyor 130 may be located at a second level lower than the first level. That is, a direction where the tube 10 moves in the first conveyor 110 may be different from a direction where the tube 20 moves in the second conveyor 130, and the second conveyor 130 may be located relatively lower in a third direction D3 than the first conveyor 110. In other words, the first conveyor 110 may be located relatively higher in a fourth direction D4 opposite to the third direction D4 than the second conveyor 130. Here, the third direction D4 may be perpendicular to the first direction D1 and the second direction D2. The tube 15 released from the release portion of the guiding body 205 may be provided to the second conveyor 130, and the tube 20 provided in the second conveyor 130 may move in the second direction D2.

In exemplary embodiments, the tube 20 released from the release portion of the guiding body 205 may be provided between adjacent two rollers 135 among the rollers 135. For example, the tube 20 moved in the second direction D2 may be transferred to the labelling process device that attaches a label to the tube 20, and the adjacent two rollers 135 may assist a rotation of the tube 20 while the tube 20 is rotated so that the labelling process device attaches the label to the tube 20. The rollers 135 may be manufactured using plastic.

In exemplary embodiments, an upper surface of the second conveyor 130 that is in contact with the tube 20 may be inclined at a predetermined angle with respect to the ground. Since the labelling process device performs the labelling process in a state where the tube 20 is inclined, the upper surface of the second conveyor 130 may be in contact with a side surface of the tube 20 so that the tube 20 is inclined at a predetermined angle. For example, the tube 20 may be inclined by the upper surface of the second conveyor 130 so that a solution accommodated in the body 22 does not stick to the lid 27, and the solution accommodated in the body 22 may not stick to the lid 27 while the labelling process is performed.

The fifth detecting sensor 370 may be positioned spaced apart from the guiding body 205 and the second conveyor 130. In exemplary embodiments, the fifth detecting sensor 370 may detect presence or absence of the tube 20 located between the adjacent two rollers 135 by being released from the release portion of the guiding body 205. The fifth detecting sensor 370 may be a laser detecting sensor that detects the presence or absence of the tube 20 using a laser.

For example, when the fifth detecting sensor 370 detects the presence of the tube 20 located between the adjacent two rollers 135 by being released from the release portion of the guiding body 205, the adjacent two rollers 135 may move in the second direction D2. In other words, the plurality of rollers 135 may include first through n-th rollers 135, where n is an integer greater than 4, and k-th and (k+1)th rollers 135 among the first through n-th rollers 135 may be located under the release portion of the guiding body 205, where k is an integer between 1 and n. The tube 20 is provided between the k-th and (k+1)th rollers 135 by being released from the release portion of the guiding body 205. After the tube 20 is provided between the k-th and (k+1)th rollers 135, the k-th and (k+1)th rollers 135 may move in the second direction D2, and then (k-2)th and (k-1)th rollers 135 among the plurality of the rollers 135 may be located under the release portion of the guiding body 205. The tube 20 may be provided between the (k-2)th and (k-1)th rollers 135 by being released from the release portion of the guiding body 205.

Referring again to FIGS. 4, 9, 11, 12, 13, and 14, the guiding body 205 may be positioned between the first conveyor 110 and the second conveyor 130, and the guiding body 205 may guide the tube 10 so that the tube 10 provided in the first conveyor 110 is slid down. As described above, the guiding body 205 may include a first guiding body 210 and a second guiding body 220. In exemplary embodiments, a first supporting portion 211 having a predetermined curvature may be formed in the first guiding body 210. In addition, the second guiding body 220 may be spaced apart from the first guiding body 210, and a second supporting portion 212 having the predetermined curvature may be formed in the second guiding body 220. In other words, the first guiding body 210 and the second guiding body 220 may include a supporting portion having the substantially same curvature. For example, the tube 15 may be slid down through a space spaced apart between the first guiding body 210 and the second guiding body 220 while the tube 15 pushed by the push member 290 is supported by the first and second supporting portions 211 and 212. In other words, the tube 15 may be slid down while the first supporting portion 211 and the second supporting portion 212 are in contact with the protrusion 25 of the tube 15. In addition, while the tube 15 is slid down, the lid 27 positioned on the protrusion 25 may be located above the first and second supporting portions 211 and 212, and the body 22 corresponding to a lower portion of the protrusion 25 may be located under the first and second supporting portions 211 and 212.

In exemplary embodiments, when the tube 10 placed in the opening 275 of the delivering member 270 is pushed by the push member 290, the tube 15 may be slid down due to pushing force of the push member 290 and potential energy. For example, the guiding body 205 may have a fan shape, and the tube 15 may be slid down along an arc of the fan shape. The guiding body 205 may include plastic. In exemplary embodiments, the guiding body 205 may be manufactured using PEEK.

The first detecting sensor 230 may be disposed in a first position of the guiding body 205 (or a first position of the first guiding body 210). For example, a first opening is formed in the first position of the first guiding body 210, and the first detecting sensor 230 may be disposed in the first opening. The first opening may be located at an upper portion of the first guiding body 210 based on the first supporting portion 211. Here, the first position of the guiding body 205 may be located adjacent to the release portion of the guiding body 205. The first detecting sensor 230 may generate a first detecting signal SS1 by detecting presence or absence of the tube 15 located at the first position of the guiding body 205, and the first detecting signal SS1 may be transmitted to the controller 300. The first detecting sensor 230 may be a laser detecting sensor that detects the presence or absence of the tube 15 using a laser.

The second detecting sensor 240 may be disposed in a second position of the guiding body 205 (or a second position of the first guiding body 210). For example, a second opening is formed in the second position of the second body 210, and the second detecting sensor 240 may be disposed in the second opening. The second opening may be located at the upper portion of the first guiding body 210 based on the first supporting portion 211. Here, the first position of the guiding body 205 may be located closer to the release portion of the guiding body 205 than the second position of the guiding body 205. The second detecting sensor 240 may generate a second detecting signal SS2 by detecting presence or absence of the tube 15 located at the second position of the guiding body 205, and the second detecting signal SS2 may be transmitted to the controller 300. The second detecting sensor 240 may be a laser detecting sensor that detects the presence or absence of the tube 15 using a laser.

The third detecting sensor 330 may be disposed in a third position of the guiding body 205 (or a third position of the first guiding body 210). For example, a third opening is formed in the third position of the first guiding body 210, and the third detecting sensor 330 may be disposed in the third opening. The third opening may be located at the upper portion of the first guiding body 210 based on the first supporting portion 211. Here, the third position of the guiding body 205 may be located closer to the input of the guiding body 205 than the second position of the guiding body 205, and the second position of the guiding body 205 may be located between the third position of the guiding body 205 and the first position of the guiding body 205. The third detecting sensor 330 may generate a third detecting signal SS3 by detecting whether the tube 15 is placed at the third position for a predetermined period of time or more, and the third detecting signal SS3 may be transmitted to the controller 300. In exemplary embodiments, when the controller 300 detects the third detecting signal SS3, the third stopper 310 may be maintained in the closed state. For example, when the tubes 15 are fully loaded to the third position of the guiding body 205, the controller 300 may stop the tube 10 from being fed from the first conveyor 110 to the delivering member 270. Alternately, a position of the third detecting sensor 330 may be changed to adjust the number of the fully loaded tube 15. For example, to relatively reduce the number of the fully loaded tube 15, the third detecting sensor 330 may be positioned closer to the second opening. The third detecting sensor 330 may be a laser detecting sensor that detects the presence or absence of the tube 15 using a laser.

The controller 300 may generate each of the first signal S1, the second signal S2, and the third signal S3 based on the first detecting signal SS1, the second detecting signal SS2, and the third detecting signal SS3, and the controller 300 may control the first blocking member 450, the second blocking member 460, and the third stopper 310 based on the first signal S1, the second signal S2, and the third signal S3. In exemplary embodiments, the controller 300 may control so that the slid-down tube 15 through the guiding body 205 is selectively provided to the second conveyor 130 based on the first signal S1, the second signal S2, and the third signal S3. In other words, the controller 300 may control an operation of each of the first blocking member 450, the second blocking member 460, and the third stopper 310. As described above, the controller 300 may be provided from a detecting signal from the fourth detecting sensor 350, and the controller 300 may control an operation of each of the third stopper 310, the delivering member 270, and the push member 290 through the detecting signal so the tube 10 is provided to the input portion of the guiding body 205.

The first stopper 250 may be disposed adjacent to the first position of the guiding body 205. For example, a fourth opening may be formed between the release portion of the guiding body 205 and the first opening, and the fourth opening may be located at the upper portion of the first guiding body 210 based on the first supporting portion 211. In addition, the first stopper 250 may be located inside the guiding body 205 or may not be located inside the guiding body 205 through the fourth opening. In other words, the first stopper 250 may operate in a closed state that is located inside the guiding body 205 and an open state that is not located inside the guiding body 205 based on the first signal S1. For example, when the first stopper 250 is the closed state, the first stopper 250 may support the slid-down tube 15 placed in the first position of the guiding body 205 so that the slid-down tube 15 placed in the first position of the guiding body 205 is not provided to the second conveyor 130. Otherwise, when the first stopper 250 is the open state, the first stopper 250 may not support the slid-down tube 15 placed in the first position of the guiding body 205 so that the slid-down tube 15 placed in the first position of the guiding body 205 is provided to the second conveyor 130 through the release portion of the guiding body 205. In other words, the first stopper 250 may be spaced apart from the slid-down tube 15 placed in the first position of the guiding body 205. The first stopper 250 may include plastic. In exemplary embodiments, the first stopper 250 may be manufactured using PEEK.

The first sub-stopper 255 may be positioned adjacent to the first stopper 250. For example, a fifth opening may be formed adjacent to the fourth opening, and the fifth opening may be located at a lower portion of the first guiding body 210 based on the first supporting portion 211. In addition, the first sub-stopper 255 may be located inside the guiding body 205 or may not be located inside the guiding body 205 through the fifth opening. In exemplary embodiments, the first sub-stopper 255 may operate in the same manner as the first stopper 250. In other words, the first sub-stopper 255 may operate in synchronization with the first stopper 250. For example, the first stopper 250 and the first sub-stopper 255 may be connected by the first connecting portion 257, and the first connecting portion 257 may have a forward state and a backward state in an outside of the guiding body 205. Thus, when the first connecting portion 257 is the forward state, the first stopper 250 and the first sub-stopper 255 may be the closed state. In addition, when the first connecting portion 257 is the backward state, the first stopper 250 and the first sub-stopper 255 may be the open state. In exemplary embodiments, when the first connecting portion 257 is the forward state, the first stopper 250 may support an upper portion (e.g., the lid 27 sealed in the body 22) of the slid-down tube 15 placed in the first position of the guiding body 205, and the first sub-stopper 255 may support a lower portion (e.g., a side surface part of the body 22 opposite to the lid 27 sealed in the body 22) of the slid-down tube 15 placed in the first position of the guiding body 205. Each of the first sub-stopper 255 and the first connecting portion 257 may include plastic. In exemplary embodiments, each of the first sub-stopper 255 and the first connecting portion 257 may be manufactured using PEEK.

The second stopper 260 may be disposed adjacent to the second position of the guiding body 205. For example, a sixth opening may be formed between the first opening and the second opening, and the sixth opening may be located at the upper portion of the first guiding body 210 based on the first supporting portion 211. In addition, the second stopper 260 may be located inside the guiding body 205 or may not be located inside the guiding body 205 through the sixth opening. In other words, the second stopper 260 may operate in a closed state that is located inside the guiding body 205 and an open state that is not located inside the guiding body 205 based on the second signal S2. For example, when the second stopper 260 is the closed state, the second stopper 260 may support the slid-down tube 15 placed in the second position of the guiding body 205 so that the slid-down tube 15 placed in the second position of the guiding body 205 is not provided to the first position of the guiding body 205. Here, when the second stopper 260 is the closed state, the first stopper 250 may be the open state. Otherwise, when the second stopper 260 is the open state, the second stopper 250 may not support the slid-down tube 15 placed in the second position of the guiding body 205 so that the slid-down tube 15 placed in the second position of the guiding body 205 is provided to the first position of the guiding body 205. In other words, the second stopper 250 may be spaced apart from the slid-down tube 15 placed in the second position of the guiding body 205. Here, when second stopper 260 is the open state, the first stopper 250 may be the closed state. The second stopper 260 may include plastic. In exemplary embodiments, the second stopper 260 may be manufactured using PEEK.

The second sub-stopper 265 may be positioned adjacent to the second stopper 260. For example, a seventh opening may be formed adjacent to the sixth opening, and the seventh opening may be located at the lower portion of the first guiding body 210 based on the first supporting portion 211. In addition, the second sub-stopper 265 may be located inside the guiding body 205 or may not be located inside the guiding body 205 through the seventh opening. In exemplary embodiments, the second sub-stopper 265 may operate in the same manner as the second stopper 260. In other words, the second sub-stopper 265 may operate in synchronization with the second stopper 260. For example, the second stopper 260 and the second sub-stopper 265 may be connected by the second connecting portion 267, and the second connecting portion 267 may have a forward state and a backward state in the outside of the guiding body 205. Thus, when the second connecting portion 267 is the forward state, the second stopper 260 and the second sub-stopper 265 may be the closed state. In addition, when the second connecting portion 267 is the backward state, the second stopper 260 and the second sub-stopper 265 may be the open state. In exemplary embodiments, when the second connecting portion 267 is the forward state, the second stopper 260 may support the upper portion (e.g., the lid 27 sealed in the body 22) of the slid-down tube 15 placed in the second position of the guiding body 205, and the second sub-stopper 265 may support the lower portion (e.g., the side surface part of the body 22 opposite to the lid 27 sealed in the body 22) of the slid-down tube 15 placed in the second position of the guiding body 205. Each of the second sub-stopper 265 and the second connecting portion 267 may include plastic. In exemplary embodiments, each of the second sub-stopper 265 and the second connecting portion 267 may be manufactured using PEEK.

However, although it has been described that each of the first and second stoppers 250 and 260 and the first and second sub-stoppers 255 and 265 penetrates the first guiding body 210 from an outside of the guiding body 205 into an inside of the guiding body 205 through the opening in the first invention, a configuration of the first invention is not limited thereto. For example, in some exemplary embodiments, each of the first and second stoppers 250 and 260 and the first and second sub-stoppers 255 and 265 may be implemented in a hinge manner in the inside of the guiding body 205 without the opening.

As the apparatus 100 according to exemplary embodiments of the first invention includes the sliding structure 200, the tube may be slid down without falling when the tube provided in the first conveyor 110 located at a relatively high level moves to the second conveyor 130 located at a relatively low level. Accordingly, since the tube does not fall, the tube may not be damaged by impact when falling or may not be lost to the outside of the second conveyor 130. In addition, a solution accommodated in the tube may not stick to the lid of the tube due to the impact when falling, so that a relatively large amount of the solution may not be lost.

In addition, as the sliding structure 200 includes the controller 300, the controller 300 may control so that the tube is selectively provided to the second conveyor 130. Accordingly, since the controller 300 may accurately position the tube between adjacent two rollers 135 among a plurality of the rollers 135 included in the second conveyor 130, labelling defects for the tube may not occur in the labelling process.

Further, as the apparatus 100 includes the third detecting sensor 330, the controller 300 may control so that the tube is selectively provided to the guiding body 205. Accordingly, the controller 300 may prevent the tube from being over-provided (or over-loaded) to the guiding body 205.

FIG. 15 is a flow chart illustrating a method of transferring a tube of the apparatus according to exemplary embodiments of the first invention.

Referring to FIG. 15, a method of transferring a tube of the apparatus 100 (refer to as 'method' hereinafter) include a step S810 of transferring a tube through a first conveyor 110, a step S820 of transferring the tube through a delivering member 270, a step S830 of providing the tube to an input portion of a guiding body 205 through a push member 290, a step S840 of sliding down the tube through the guiding body 205, and a step S850 of selectively providing the slid-down tube to a second conveyor 130 through a controller 300.

The tube may be transferred in a first direction D1 through the first conveyor 110. the tube may be transferred from a release portion of the first conveyor 110. After a third stopper 310 is a closed state and the delivering member 270 is located at a first opening position adjacent to the release portion of the first conveyor 110, the fourth detecting sensor 350 may detect absence of the tube in an opening 275 of the delivering member 270. The controller 300 may change the third stopper 310 to an open state, and the tube may be provided from the release portion of the first conveyor 110 into the opening 275 of the delivering member 270. The fourth detecting sensor 350 may detect presence of the tube in the opening 275 of the delivering member 270, and the controller 300 may change the third stopper 310 to the closed state.

The controller 300 may position the delivering member 270 to a second opening position located in the input portion of the guiding body 205. In other words, the tube may be transferred to the second opening position through the delivering member 270.

The fourth detecting sensor 350 may detect the presence of the tube in the opening 275 of the delivering member 270, and the controller 300 may change the push member 290 to a forward state. In other words, the push member 290 may push the tube placed in the opening 275 of the delivering member 270 to the input portion of the guiding body 205.

The tube may be slid down through the guiding body 205. The tube may be slid down through a space spaced apart between a first guiding body 210 and a second guiding body 220 while the tube pushed by the push member 290 is supported by first and second supporting portions 211 and 212, and a second blocking member 460 may support the tube so that the tube is located at a second position of the guiding body 205. A first detecting sensor 230 may detect the absence of the tube located at a first position of the guiding body 205, and the controller 300 may operate the second blocking member 460 in an open state (e.g., a state that does not support the tube or a state that is spaced apart from the tube). The first blocking member 450 may support the tube so that the tube is located in the first position.

A fifth detecting sensor 370 may detect the absence of the tube placed between adjacent two rollers 135 positioned adjacent to a release portion of the guiding body 205, and the controller 300 may operate the first blocking member 450 in the open state. At the same time, a second detecting sensor 240 may detect the presence of the tube located at the second position of the guiding body 205, and the controller 300 may operate the second blocking member 460 in a closed state (e.g., a state that supports the tube) so that the tube located at the second position of the guiding body 205 is supported. That is, the slid-down tube may be selectively provided to the second conveyor 130 through the controller 300.

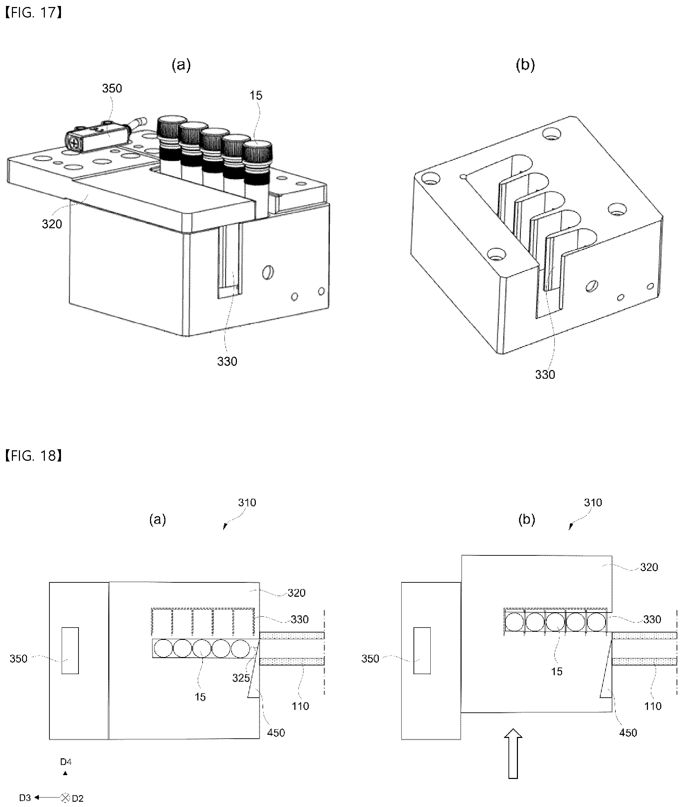

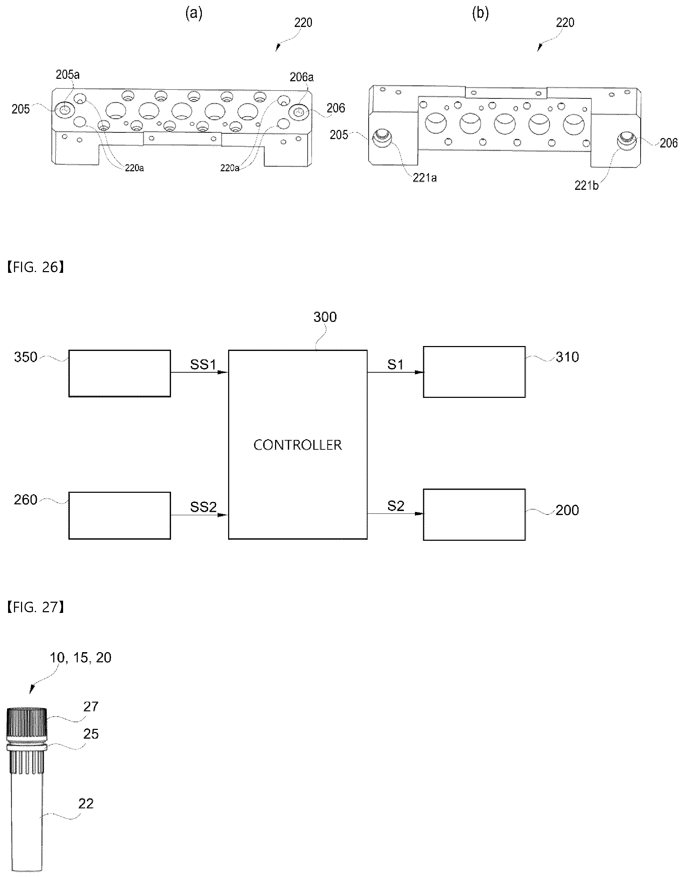

FIG. 16 is a diagram illustrating an apparatus for transferring a tube according to exemplary embodiments of a second invention, and FIG. 17 is a perspective view illustrating an alignment structure included in the apparatus for transferring the tube of FIG. 16. FIG. 18 is a schematic diagram for describing an operation of the alignment structure of FIG. 17, and FIGS. 19, 20, 21, 22, 23, 24, and 25 are diagrams illustrating a transferring structure included in the apparatus for transferring the tube of FIG. 16. FIG. 26 is a block diagram for describing a controller included in the apparatus for transferring the tube of FIG. 16, and FIG. 27 is a diagram for describing a tube transferred through the apparatus for transferring the tube of FIG. 16.

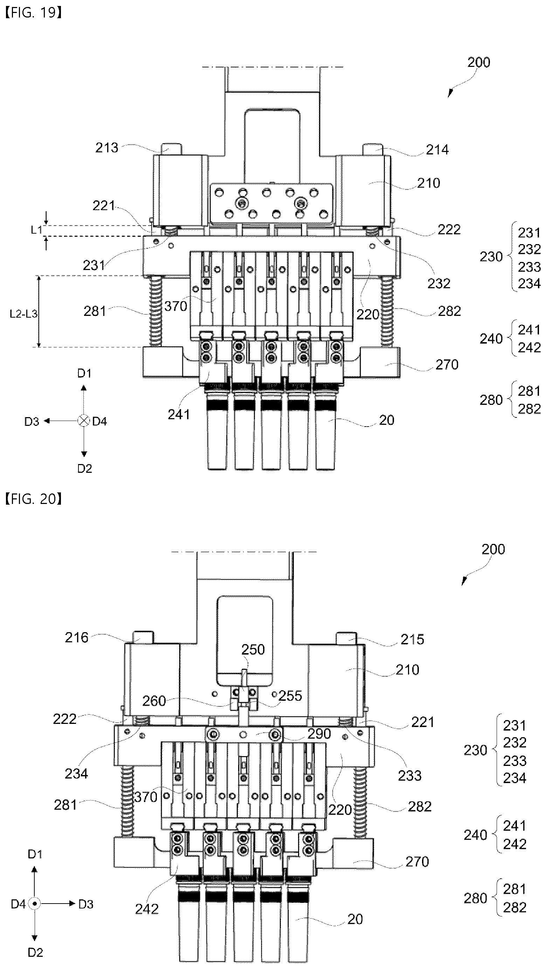

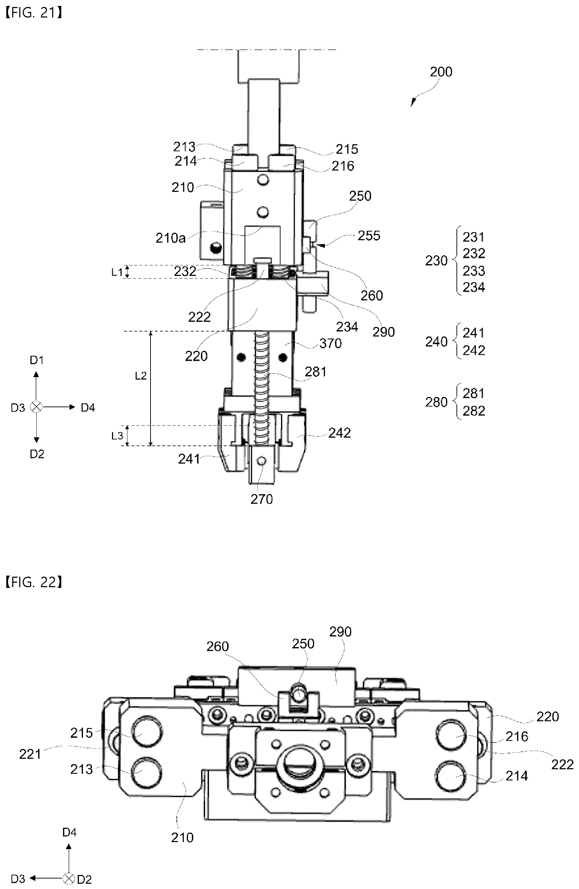

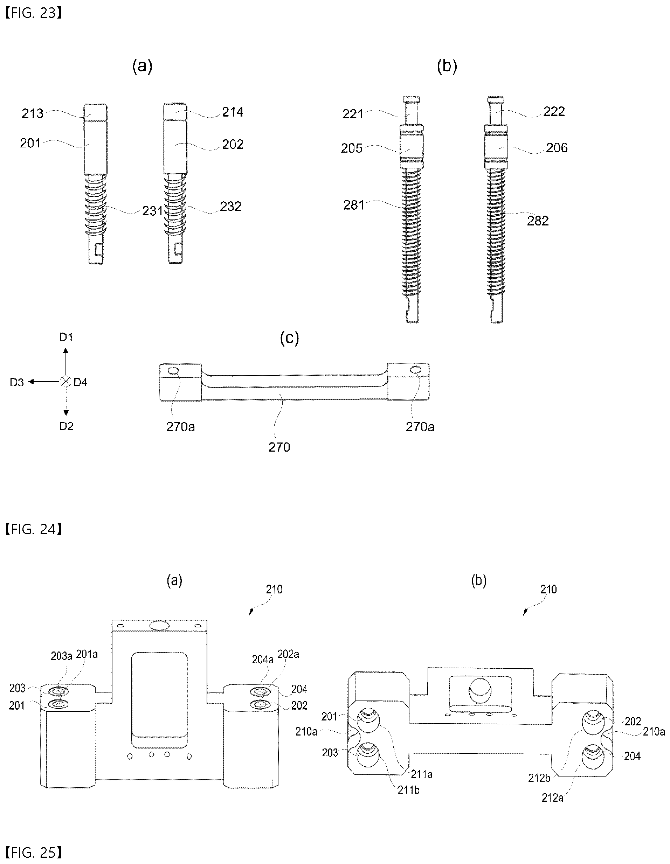

For example, FIG. 18 is an upper view for describing an operation the alignment structure. In addition, FIG. 19 is a front view of the transferring structure, and FIG. 20 is a back view of the transferring structure. FIG. 21 is a side view of the transferring structure, and FIG. 22 is an upper view of the transferring structure. FIG. 23 is a partially enlarged view for describing a guide staff, a fixing member, an elastic member, and a lower supporting member included in the transferring structure, and FIG. 24 is a partially enlarged view for describing a body included in the transferring structure. FIG. 25 is a partially enlarged view for describing an upper supporting member included in the transferring structure. Here, the transferring structure illustrated in FIGS. 19 and 20 illustrates a state that grips the tube, and the transferring structure illustrated in FIG. 21 illustrates a state that does not grip the tube.

Referring to FIGS. 16, 17, 18, 19, 20, 21, 22, 23, 24, 25, 26, and 27, an apparatus for transferring a tube (refer to as 'apparatus 1000' hereinafter) may include a conveyor 110, a transferring structure 200, a controller 300, an alignment structure 310, a storage 410, a discharge part 430, a stopper 450, second detecting sensors 470, a third detecting sensor 350, a delivering member 490, etc. Here, the transferring structure 200 may include a body 210, an upper supporting member 220, an upper elastic member 230, a first fixing member 201, a second fixing member 202, a third fixing member 203, a fourth fixing member 204, a fifth fixing member 205, a sixth fixing member 206, a connecting member 370, a gripper 240, a shaft member 250, a first detecting sensor 260, a protruding member 290, a first guide staff 213, a second guide staff 214, a third guide staff 215, a fourth guide staff 216, a fifth guide staff 221, a sixth guide staff 222, a lower supporting member 270, and a lower elastic member 280. The upper elastic member 230 may include a first upper elastic member 231, a second upper elastic member 232, a third upper elastic member 233, and a fourth upper elastic member 234, and the lower elastic member 280 may include a first lower elastic member 281 and a second lower elastic member 282. The gripper 240 may include a first gripper panel 241 and a second gripper panel 242. In addition, the alignment structure 310 may include an upper member 320 and a guider 330, and a recess portion 325 where a tube fed from the conveyor 110 is placeable may be formed in the upper member 320. Further, the controller 300 may generate a first signal S1 and a second signal S2. In exemplary embodiments, the transferring structure 200 may be connected to a robot arm. For example, the transferring structure 200 may be elevated in a first direction D1 and be descended in a second direction D2 to grip and release the tube, and may be moved in all directions from front and back and left side to right side. Here, the first direction D1 may be substantially opposite to the second direction D2. In addition, the controller 300 may control the transferring structure 200 so that the transferring structure 200 operates in a first operation mode, a second operation mode, and a third operation mode.

The apparatus 1000 may correspond to a tube transferring device implemented to provide a labelled tube in the storage 410 after a labelling process is performed on a tube in a labelling process device.

For convenience of explanation, when the tube is placed in the conveyor 110, the tube is defined as a tube 10, and when a tube is placed in the alignment structure 310, the tube is defined as a tube 15. When a tube is gripped by the gripper 240, the tube is defined as a tube 20. That is, each of the tubes 10, 15, and 20 may have the same shape. In addition, each of the tubes 10, 15, and 20 may include a cylindrical body 22, and a protrusion 25 may be formed in a side surface of the body 22 (e.g., a tube neck). In addition, each of the tubes 10, 15, and 20 may further include a lid 27, and the body 22 may be sealed with the lid 27. Further, a solution of a liquid state may be accommodated in the body 22 (refer to FIG. 26).

For example, as illustrated in FIGS. 16, 17, and 18, the conveyor 110 may feed the tube 10 in a left side direction (e.g., a third direction D3), and the alignment structure 310 may feed the tube 15 in a front direction (e.g., a fourth direction D4). The transferring structure 200 may be provided to the storage 410 after the transferring structure 200 is moved in a state where the tube 20 is gripped. In addition, the labelling process device may be positioned adjacent to the conveyor 110 of the apparatus 1000 so that the tube where the labelling process is performed is fed to the conveyor 110. Further, the storage 410 may be moved to a complete product process device after the tube 20 is placed in the storage 410.

Referring to FIGS. 16, 17, and 18, the conveyor 110 may extend in left side and right side directions, and the tube 10 may be fed in the third direction D3 through the conveyor 110. For example, after the labelling process is performed in the labelling process device that attaches a label to the tube, the tube where the label is attached may be provided to an input portion of the conveyor 110 through a robot arm. The tube 10 provided in the input portion of the conveyor 110 may be fed to a release portion of the conveyor 110 along the third direction D3. An upper surface of the conveyor 110 facing a lower surface of the tube 10 may be parallel to the ground, and the upper surface of the conveyor 110 may face the lower surface of the tube 10 so that the tube 10 is stood. In exemplary embodiments, the conveyor 110 may be a linear feeder, and the lower surface of the tube 10 may be spaced apart from the upper surface of the conveyor 110. In addition, the tube 10 may be fed through a vibration of the linear feeder, and to transmit the vibration to the tube 10, the conveyor 110 may include a vibration transmission unit.

The second detecting sensors 470 may be arranged adjacent to the release portion of the conveyor 110. For example, the second detecting sensors 470 may be fixed to a side surface of the conveyor 110, and the second detecting sensors 470 may detect at least three tubes 10 located adjacent to the release portion of the conveyor 110. Each of the second detecting sensors 470 may be a laser detecting sensor that detects presence or absence of the tube 10 using a laser.

In exemplary embodiments, the number of the second detecting sensors 470 may be five, and each of five second detecting sensors 470 may detect the presence or absence of each of five tubes 10 located adjacent to the release portion of the conveyor 110. In other words, the five tubes 10 may be located adjacent to the stopper 450, and the second detecting sensor 470, which is closest to the stopper 450, among the five second detecting sensors 470 may detect the tube 10, which is in contact with (or closest to) the stopper 450, among the five tubes 10. Remaining four second detecting sensors 470 among the five second detecting sensors 470 may detect remaining four tubes 10 among the five tubes 10, respectively.

The stopper 450 may be disposed adjacent to the release portion of the conveyor 110. The stopper 450 may operate in an open state and a closed state. The tubes 10 located adjacent to the release portion of the conveyor 110 may be provided to the alignment structure 310 (or the recess portion 325 of the upper member 320) in the open state of the stopper 450, and the tubes 10 located adjacent to the release portion of the conveyor 110 may not be provided to the alignment structure 310 (or the recess portion 325 of the upper member 320) in the closed state of the stopper 450. The stopper 450 may include a plastic such as polyether ether ketone (PEEK), polyacrylether ketone (PAEK), polyether imide (PEI), polyether sulfone (PES), etc. In exemplary embodiments, the stopper 4500 may be manufactured using PEEK.

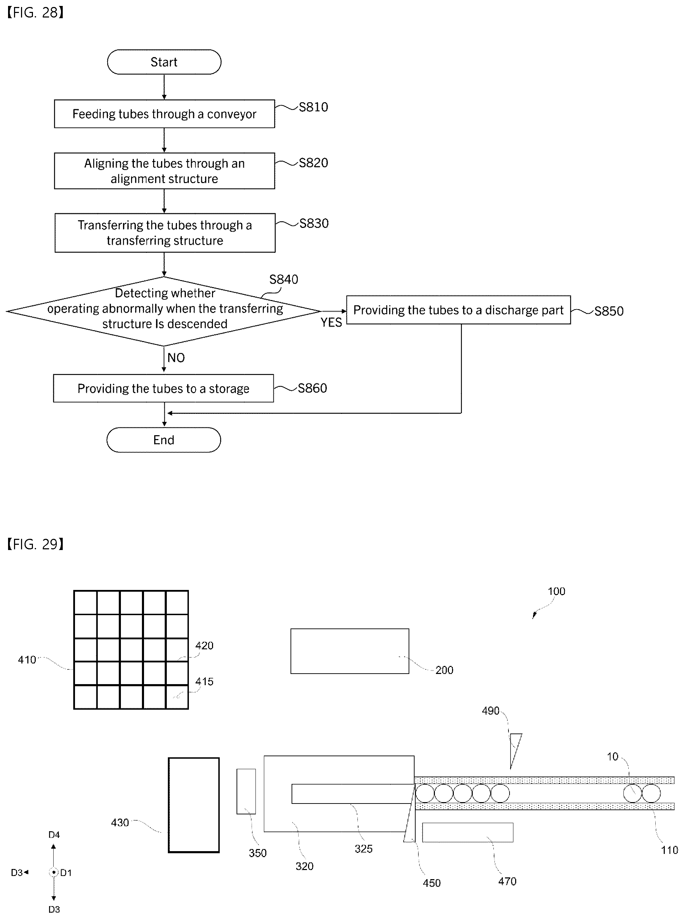

The delivering member 490 may be disposed adjacent to the conveyor 110. The delivering member 490 may operate in a forward state that is located inside the conveyor 110 and a backward state that is not located inside the conveyor 110. For example, the delivering member 490 may be the forward state in the open state of the stopper 450, and the delivering member 490 may provide the at least three tubes 10 located adjacent to the release portion of the conveyor 110 to the alignment structure 310 (or the recess portion 325 of the upper member 320). In this process, the delivering member 490 may be moved in the third direction D3 (refer to FIGS. 29, 30, 31, and 32). That is, the delivering member 490 is movable in the third direction D3 (or the left side direction) and a direction (or the right side direction) opposite to the third direction D3. Otherwise, the delivering member 490 may be the backward state in the closed state of the stopper 450. The delivering member 490 may include plastic.

In exemplary embodiments, the tubes 10 may be collected to the release portion of the conveyor 110 in the closed state of the stopper 450. After five second detecting sensors 470 detect the presence of each of five tubes 10 located adjacent to the release portion of the conveyor 110, the stopper 450 may be changed to the open state, and the delivering member 490 may be changed to the forward state to be in contact with the tube 10, which is located furthest from the stopper 450, among the five tubes 10. As the delivering member 490 is moved in the third direction D3 in the open state of the stopper 450 after the delivering member 490 is in contact with the tube 10, which is located furthest from the stopper 450, among the five tubes 10, the five tubes 10 may be provided to the alignment structure 310 (or the recess portion 325 of the upper member 320).

The alignment structure 310 may be disposed adjacent to the release portion of the conveyor 110. As described above, the alignment structure 310 may include the upper member 320 and the guider 330. The alignment structure 310 may align the tubes 15 provided from the conveyor 110 through the upper member 320 and the guider 330.

The upper member 320 may be disposed under the stopper 450, and the recess portion 325 of the upper member 320 may face the release portion of the conveyor 110. The recess portion 325 may have a shape recessed from a side surface of the upper member 320 into an inner side of the upper member 320. For example, the recess portion 325 may have an opened shape in a portion that faces the release portion of the conveyor 110, and the at least three tubes 10 located adjacent to the release portion of the conveyor 110 may be provided to the recess portion 325 through the opened portion. After the at least three tubes 10 are provided to the recess portion 325, the upper member 320 together with the at least three tubes 15 placed in the recess portion 325 may be moved in the fourth direction D4 (e.g., the forward direction). That is, the upper member 320 is movable in the fourth direction D4 and a direction (the backward direction) opposite to the fourth direction D4 under the stopper 450.

The guider 330 may be disposed under the upper member 320, and the guider 330 may be disposed between adjacent two tubes 15 among the tubes 15 so that the tubes 15 are arranged spaced apart from each other by a predetermined distance. For example, the at least three tubes 10 released from the release portion of the conveyor 110 may be placed in the recess portion 325 of the upper member 320 by the delivering member 490, and the at least three tubes 15 placed in the recess portion 325 may be located adjacent to each other (or be in contact with each other). After the at least three tubes 15 are placed in the recess portion 325 of the upper member 320, the upper member 320 together with the at least three tubes 15 may be moved in the fourth direction D4. In this process, as the guider 330 is disposed between the tubes 15, the tubes 15 may be spaced apart from each other by the predetermined distance. In other words, the guider 330 may include first to n-th protrusions, where n is an integer more than 1, and one tube 15 may be disposed between k-th and (k+1)th protrusions among the first to n-th protrusions, where k is an integer between 1 and n. Each of the upper member 320 and the guider 330 may include plastic. In exemplary embodiments, each of the upper member 320 and the guider 330 may be manufactured using PEEK.

In exemplary embodiments, the five tubes 10 located adjacent to the release portion of the conveyor 110 may be placed in the recess portion 325 by being released through the delivering member 490, and the five tubes 15 (e.g., the lid 27 of the five tubes 15 each) placed in the recess portion 325 may be located adjacent to each other (or be in contact with each other) (refer to FIG. 18a). Here, the upper member 320 is defined as being located at a first position, and the first position of the upper member 320 may correspond to a position capable of providing the five tubes 15 from the conveyor 110. The five tubes 15 placed in the recess portion 325 together with the upper member 320 may be moved in the fourth direction D4 (refer to FIG. 18b). Here, the upper member 320 is defined as being located at a second position, and the second position of the upper member 320 may correspond to a position where the five tubes 15 are spaced apart by the guider 330. The guider 330 may have six protrusions, and five empty spaces may be defined by the six protrusions. As the five tubes 15 placed in the recess portion 325 are moved in the fourth direction D4, the five tubes 15 may be placed in the five empty spaces, respectively. In this case, the five tubes 15 may be arranged in the third direction D3 so that the five tubes 15 (e.g., the lid 27 of the five tubes 15 each) are spaced apart from each other by a width length of the protrusions each.

The third detecting sensor 350 may be disposed on the alignment structure 310. For example, the third detecting sensor 350 may be fixed to an upper surface of the alignment structure 310, and the third detecting sensor 350 may detect whether the at least three tubes 15 are placed in the recess portion 325. The third detecting sensor 350 may generate a detecting signal SS1, and the third detecting sensor 350 may transmit the detecting signal SS1 to the controller 300 (refer to FIG. 26). The third detecting sensor 350 may be a laser detecting sensor that detects the presence or absence of the tube 15 using a laser.

In exemplary embodiments, the third detecting sensor 350 may detect the presence or absence of the tube 15, which is closest to the third detecting sensor 350, among the five tubes 15 placed in the recess portion 325. For example, the tube 15 closest to the third detecting sensor 350 may correspond to the tube 10, which is in contact with the stopper 450, among the five tubes 10 located adjacent to the release portion of the conveyor 110. When the third detecting sensor 350 detects the tube 15 closest to the third detecting sensor 350 in the recess portion 325, the controller 300 may receive the detecting signal SS1 (refer to FIG. 26). When the controller 300 receives the detecting signal SS1, the controller 300 may move the upper member 320 in the fourth direction D4 based the first signal S1 (refer to FIG. 26). As the upper member 320 is moved in the fourth direction D4, the five tubes 15 may be spaced apart by the predetermined distance (refer to FIG. 18b).

Referring again to FIGS. 16, 19, 20, 21, 22, 23, 24, and 25, the transferring structure 200 may be positioned on the alignment structure 310, the storage 410, and the discharge part 430. The transferring structure 200 is connected to a robot arm, and may be move to a predetermined path. As described above, the transferring structure 200 may include the body 210, the upper supporting member 220, the upper elastic member 230, the first fixing member 201, the second fixing member 202, the third fixing member 203, the fourth fixing member 204, the fifth fixing member 205, the sixth fixing member 206, the connecting member 370, the gripper 240, the shaft member 250, the first detecting sensor 260, the protruding member 290, the first guide staff 213, the second guide staff 214, the third guide staff 215, the fourth guide staff 216, the fifth guide staff 221, the sixth guide staff 222, the lower supporting member 270, and the lower elastic member 280.

The body 210 may be connected to the robot arm, and the body 210 may be fixed to the robot arm. A lower surface of the 210 may be spaced apart from an upper surface of the upper supporting member 220 by a first distance L1 (refer to FIG. 21). As illustrated in FIG. 24, a first upper guide hole 211a penetrated from an upper surface of the body 210 into the second direction D2 may be formed in a left side portion of the body 210 (based on the transferring structure 200 illustrated in FIG. 19), and a second upper guide hole 212a penetrated from the upper surface of the body 210 into the second direction D2 may be formed in a right side portion of the body 210. The second upper guide hole 212a may have the substantially same shape as the first upper guide hole 211a. Here, the first upper guide hole 211a may face the second upper guide hole 212a, and the first upper guide hole 211a may be in substantially parallel to the second upper guide hole 212a. In addition, a third upper guide hole 211b located adjacent to the first upper guide hole 211a may be formed in the left side portion of the body 210, and the third upper guide hole 211b may have the substantially same shape as the first upper guide hole 211a. Further, a fourth upper guide hole 212b located adjacent to the second upper guide hole 212a may be formed in the right side portion of the body 210, and the fourth upper guide hole 212b may have the substantially same shape as the second upper guide hole 212a. Here, the third upper guide hole 211b may face the fourth upper guide hole 212b, and the third upper guide hole 211b may be in substantially parallel to the fourth upper guide hole 212b. In exemplary embodiments, each of the first to fourth upper guide holes 211a, 212a, 211b, and 212b may have a cylindrical shape.

The body 210 may include a metal, an alloy, metal nitride, etc. For example, the body 210 may include the metal such as gold (Au), silver (Ag), aluminum (Al), iron (Fe), zinc (Zn), lead (Nb), tungsten (W), copper (Cu), platinum (Pt), nickel (Ni), titanium (Ti), palladium (Pd), magnesium (Mg), calcium (Ca), lithium (Li), chromium (Cr), tantalum (Ta), molybdenum (Mo), scandium (Sc), neodymium (Nd), iridium (Ir), etc, the alloy such as an aluminum-containing alloy, a silver-containing alloy, a copper-containing alloy, a molybdenum-containing alloy, etc, and the metal nitride such as aluminum nitride (AlNₓ), tungsten nitride (WNₓ), titanium nitride (TiNₓ), chromium nitride (CrNₓ), tantalum nitride (TaNₓ), etc.

The first guide staff 213 may be positioned in the first upper guide hole 211a, and the first guide staff 213 may have a cylindrical shape. Here, the first fixing member 201 may be positioned in an upper portion of the first upper guide hole 211a, and an opening 201a may be formed in a center portion of the first fixing member 201. That is, the first fixing member 201 may have a hollow cylindrical shape. A first distal end of the first guide staff 213 may be connected to the upper supporting member 220 by penetrating the opening 201a of the first fixing member 201 and the first upper guide hole 211a of the body 210. A second distal end of the first guide staff 213 may have a cylindrical shape having a diameter larger than a diameter of the opening 201a of the first fixing member 201. For example, the second distal end of the first guide staff 213 may be adjacent to or in contact with the upper surface of the body 210 adjacent to the first upper guide hole 211a among the upper surface of the body 210. In other words, the second distal end of the first guide staff 213 is not located inside the first upper guide hole 211a, and when the upper supporting member 220 is moved in the first direction D1, the second distal end of the first guide staff 213 may be spaced apart from an upper surface of the first fixing member 201 while the first fixing member 201 is fixed to the body 210 inside the first upper guide hole 211a.

The first upper elastic member 231 may be disposed outside the first guide staff 213. In other words, the first guide staff 213 may be positioned inside the first upper elastic member 231, and the first guide staff 213 may guide so that the first upper elastic member 231 does not escape to the outside. One side of the first upper elastic member 231 may be in contact with an upper surface of the upper supporting member 220, and other side of the first upper elastic member 231 may be in contact with a lower surface of the first fixing member 201 positioned inside the first upper guide hole 211a of the body 210. That is, the first upper elastic member 231 may be disposed between the body 210 and the upper supporting member 220, and may maintain the first distance L1 between the body 210 and the upper supporting member 220.

The second guide staff 214 may be positioned in the second upper guide hole 212a, and the second guide staff 214 may have a cylindrical shape. Here, the second fixing member 202 may be positioned in an upper portion of the second upper guide hole 212a, and an opening 202a may be formed in a center portion of the second fixing member 202. That is, the second fixing member 202 may have a hollow cylindrical shape. A first distal end of the second guide staff 214 may be connected to the upper supporting member 220 by penetrating the opening 202a of the second fixing member 202 and the second upper guide hole 212a of the body 210. A second distal end of the second guide staff 214 may have a cylindrical shape having a diameter larger than a diameter of the opening 202a of the second fixing member 202. For example, the second distal end of the second guide staff 214 may be adjacent to or in contact with the upper surface of the body 210 adjacent to the second upper guide hole 212a among the upper surface of the body 210. In other words, the second distal end of the second guide staff 214 is not located inside the second upper guide hole 212a, and when the upper supporting member 220 is moved in the first direction D1, the second distal end of the second guide staff 214 may be spaced apart from an upper surface of the second fixing member 202 while the second fixing member 202 is fixed to the body 210 inside the second upper guide hole 212a.

The second upper elastic member 232 may be disposed outside the second guide staff 214. In other words, the second guide staff 214 may be positioned inside the second upper elastic member 232, and the second guide staff 214 may guide so that the second upper elastic member 232 does not escape to the outside. One side of the second upper elastic member 232 may be in contact with an upper surface of the upper supporting member 220, and other side of the second upper elastic member 232 may be in contact with a surface of the second fixing member 202 positioned inside the second upper guide hole 212a of the body 210. That is, the second upper elastic member 231 may be disposed between the body 210 and the upper supporting member 220, and may maintain the first distance L1 between the body 210 and the upper supporting member 220.

The third guide staff 215 may be positioned in the third upper guide hole 211b, and the third guide staff 215 may be positioned adjacent to the first guide staff 213. Here, the third fixing member 203 may be positioned in an upper portion of the third upper guide hole 211b, and an opening 203a may be formed in a center portion of the third fixing member 203. That is, the third fixing member 203 may have a hollow cylindrical shape. The third guide staff 215 may have the substantially same shape as the first guide staff 213, and the third guide staff 215 may function substantially identically to the first guide staff 213. In addition, the third fixing member 203 may have the same shape as the first fixing member 201, and the third fixing member 203 may function identically to the first fixing member 201.

The third upper elastic member 233 may be disposed between the body 210 and the upper supporting member 220. In addition, the third upper elastic member 233 may be disposed outside the third guide staff 215, and the third upper elastic member 233 may be disposed adjacent to the first upper elastic member 231. The third upper elastic member 233 may have the substantially same shape as the first upper elastic member 231, and the third upper elastic member 233 may function substantially identically to the first upper elastic member 231.

The fourth guide staff 216 may be positioned in the fourth upper guide hole 212b, and the fourth guide staff 216 may be positioned adjacent to the second guide staff 214. Here, the fourth fixing member 204 may be positioned in an upper portion of the fourth upper guide hole 212b, and an opening 204a may be formed in a center portion of the fourth fixing member 204. That is, the fourth fixing member 204 may have a hollow cylindrical shape. The fourth guide staff 216 may have the substantially same shape as the second guide staff 214, and the fourth guide staff 216 may function substantially identically to the second staff 214. In addition, the fourth fixing member 204 may have the same shape as the second fixing member 202, and the fourth fixing member 204 may function identically to the second fixing member 202. Each of the first to fourth guide staffs 213, 214, 215, and 216 and the first to fourth fixing members 201, 202, 203, and 204 may include a metal, an alloy, metal nitride, etc.

The fourth upper elastic member 234 may be disposed between the body 210 and the upper supporting member 220. In addition, the fourth upper elastic member 234 may be disposed outside the fourth guide staff 216, and the fourth upper elastic member 234 may be disposed adjacent to the second upper elastic member 232. The fourth upper elastic member 234 may have the substantially same shape as the second upper elastic member 232, and the fourth upper elastic member 234 may function substantially identically to the second upper elastic member 232. Each of the first to fourth upper elastic members 231, 232, 233, and 234 may include a compression spring. For example, the compression spring may be an open coil helical spring providing a resistance to a compressive force applied in an axial direction (e.g., the first direction D1 or the second direction D2).

However, although the transferring structure 200 of the second invention includes four guide staffs and four upper elastic members, a configuration of the second invention is not limited thereto. For example, the transferring structure 200 may include at least two guide staffs and at least two upper elastic members.

The upper supporting member 220 may be positioned under the body 210, and as described above, the upper supporting member 220 may be spaced apart from the body 210 by the first distance L1. The first distance L1 may be maintained by the upper elastic member 230. As illustrated in FIGS. 22, 23, and 25, four grooves 220a may be formed in the upper supporting member 220, and the first distal end of the first to fourth guide staffs 213, 214, 215, and 216 each may be positioned in the four grooves 220a. In addition, a lower surface of the upper supporting member 220 may be spaced apart from an upper surface of the lower supporting member 270 by a second distance L2 (refer to FIG. 21). In exemplary embodiments, the second distance L2 may be greater than the first distance L1. A first lower guide hole 221a penetrated from an upper surface of the upper supporting member 220 into the second direction D2 may be formed in a left side portion of the upper supporting member 220 (based on the transferring structure 200 illustrated in FIG. 19), and a second lower guide hole 221b penetrated from the upper surface of the upper supporting member 220 into the second direction D2 may be formed in a right side portion of the upper supporting member 220. The first lower guide hole 221a may have the substantially same shape as the second lower guide hole 221b. Here, the first lower guide hole 221a may face the second lower guide hole 221b, and the first lower guide hole 221a may be in substantially parallel to the second lower guide hole 221b. In exemplary embodiments, as illustrated in FIG. 25, the first lower guide hole 221a and the second lower guide hole 221b may be positioned further outside the four grooves 220a of the upper supporting member 220. In other words, the first lower guide hole 221a and the second lower guide hole 221b may be positioned in the outmost portion of an upper surface of the upper supporting member 220, and the four grooves 220a of the upper supporting member 220 may be positioned between the first lower guide hole 221a and the second lower guide hole 221b. The upper supporting member 220 may include a metal, an alloy, metal nitride, etc.

The protruding member 290 may be disposed in one surface of a center portion of the upper supporting member 220, as illustrated in FIGS. 20, 21, and 22, the protruding member 290 may be fixed to the one surface of the upper supporting member 220. An opening penetrating from an upper surface of the protruding member 290 into the second direction D2 may be formed in the center portion of the protruding member 290. The protruding member 290 may include a metal, an alloy, metal nitride, etc.

The shaft member 250 may be positioned in the opening of the protruding member 290, and may be fixed by the protruding member 290. In other words, the shaft member 250 may be connected to the upper supporting member 220 by the protruding member 290, and the shaft member 250 may be moved in the first direction D1 when the upper supporting member 220 is moved in the first direction D1. That is, the shaft member 250 and the upper supporting member 220 may be integrally moved in the first direction D1 or the second direction D2. The shaft member 250 may extend from an upper surface of the protruding member 290 into the first direction D1, and a part of the shaft member 250 may overlap the first detecting sensor 260. In exemplary embodiments, as illustrated in FIGS. 20 and 21, a circumferential groove 255 may be formed in a side surface of the shaft member 250, and the circumferential groove 255 may overlap the first detecting sensor 260. The shaft member 250 may include a metal, an alloy, metal nitride, etc.

The first detecting sensor 260 may be disposed in one surface of a center portion of the body 210. As illustrated in FIGS. 20, 21, and 22, the first detecting sensor 260 may be fixed to the one surface of the body 210. The first detecting sensor 260 may detect the shaft member 250. In exemplary embodiments, the first detecting sensor 260 may detect a side surface of the shaft member 250. For example, while the first distance L1 between the body 210 and the upper supporting member 220 is maintained, the first detecting sensor 260 may detect the circumferential groove 255 of the shaft member 250. Otherwise, when a distance between the body 210 and the upper supporting member 220 becomes smaller than the first distance L1 (i.e., when the upper supporting member 220 is moved in the first direction D1 and then a distance between a lower surface of the body 210 and an upper surface of the upper supporting member 220 is decreased), the first detecting sensor 260 may detect a side surface of the shaft member 250 located adjacent to the circumferential groove 255 (e.g., the side surface of the shaft member 250 located under the circumferential groove 255). When the first detecting sensor 260 detects the side surface of the shaft member 250, the first detecting sensor 260 may generate a side surface detecting signal SS2, and the side surface detecting signal SS2 may be transmitted to the controller 300 (refer to FIG. 25). The first detecting sensor 260 may be a laser detecting sensor that detects a side surface of the shaft member 250 using a laser.

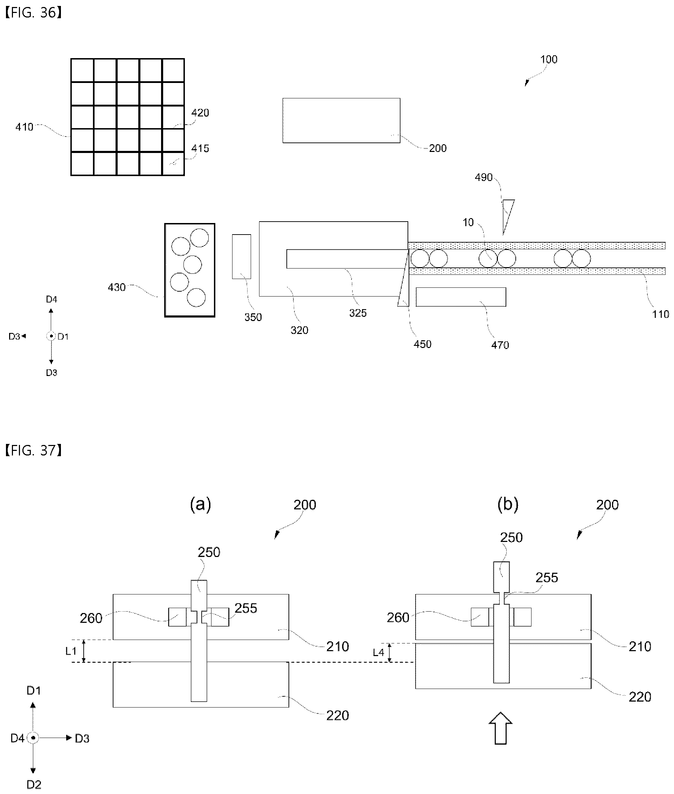

In exemplary embodiments, although the lower elastic member 280 has a maximum compression state after the lower supporting member 270 is maximally moved in the first direction D1 in a state where the gripper 240 does not grip the tube 20, the upper supporting member 220 is not moved in the first direction D1 (i.e., the upper elastic member 230 is not compressed), and the first distance L1 between the body 210 and the upper supporting member 220 may be maintained. In other words, when the lower elastic member 280 is the maximum compression state, the fifth and sixth guide staffs 221 and 222 are moved in the first direction D1, and then an upper surface of a second distal end of the fifth and sixth guide staffs 221 and 222 each may be in contact with a step portion 210a of the body 210 (refer to FIGS. 21 and 24). In other words, when a lower surface of the tube 20 is pressurized by a predetermined force or more in the first direction D1 in a state where the gripper 240 grips the tube 20 (e.g., a state where the lower supporting member 270 is moved in the first direction D1 to a third distance L3 as illustrated in FIG. 19), the lower supporting member 270 is moved in the first direction D1 by a predetermined distance, and then the upper supporting member 220 may be moved in the first direction D1 by a fourth distance L4 (refer to FIG. 37). Here, the fourth distance L4 may be less than the first distance L1. In addition, a distance L2-L3 from a lower surface of the upper supporting member 220 to an upper surface of the lower supporting member 270 in FIG. 19 may correspond to a distance obtained by subtracting the third distance L3 from the second distance L2.

As illustrated in FIGS. 22, 23, and 25, the fifth guide staff 221 may be positioned in the first lower guide hole 221a, and the fifth guide staff 221 may have a cylindrical shape. Here, the fifth fixing member 205 may be positioned in an upper portion of the first lower guide hole 221a, and an opening 205a may be formed in a center portion of the fifth fixing member 205. That is, the fifth fixing member 205 may have a hollow cylindrical shape. A first distal end of the fifth guide staff 221 may be connected to the lower supporting member 270 by penetrating the opening 205a of the fifth fixing member 205 and the first lower guide hole 221a of the upper supporting member 220. A second distal end of the fifth guide staff 221 may have a cylindrical shape having a diameter larger than a diameter of the opening 205a of the fifth fixing member 205, may be spaced apart from the fifth fixing member 205. For example, when the lower supporting member 270 is moved in the first direction D1, the second distal end of the fifth guide staff 221 may be moved in the first direction D1 while the fifth fixing member 205 is fixed to the upper supporting member 220 inside the first lower guide hole 221a.

The first lower elastic member 281 may be disposed outside the fifth guide staff 221. In other words, the fifth guide staff 221 may be positioned inside the first lower elastic member 281, and the fifth guide staff 221 may guide so that the first lower elastic member 281 does not escape to the outside. One side of the first lower elastic member 281 may be in contact with an upper surface of the lower supporting member 270, and other side of the first lower elastic member 281 may be in contact with a lower surface of the fifth fixing member 205 positioned inside the first lower guide hole 221a of the upper supporting member 220. That is, the first lower elastic member 281 may be disposed between the upper supporting member 220 and the lower supporting member 270, and may maintain the second distance L2 between the upper supporting member 220 and the lower supporting member 270.

The sixth guide staff 222 may be positioned in the second lower guide hole 221b, and the sixth guide staff 222 may have a cylindrical shape. Here, the sixth fixing member 206 may be positioned in an upper portion of the second lower guide hole 221b, and an opening 206a may be formed in a center portion of the sixth fixing member 206. That is, the sixth fixing member 206 may have a hollow cylindrical shape. A first distal end of the sixth guide staff 222 may be connected to the lower supporting member 270 by penetrating the opening 206a of the sixth fixing member 206 and the second lower guide hole 221b of the upper supporting member 220. A second distal end of the sixth guide staff 222 may have a cylindrical shape having a diameter larger than a diameter of the opening 206a of the sixth fixing member 206, and may be spaced apart from the sixth fixing member 206. For example, when the lower supporting member 270 is moved in the first direction D1, the second distal end of the sixth guide staff 222 may be moved in the first direction D1 while the sixth fixing member 206 is fixed to the upper supporting member 220 inside the second lower guide hole 221b. Each of the fifth and sixth guide staffs 221 and 222 and the fifth and sixth fixing members 205 and 206 may include a metal, an alloy, metal nitride, etc.

The second lower elastic member 282 may be disposed outside the sixth guide staff 222. In other words, the sixth guide staff 222 may be positioned inside the second lower elastic member 282, and the sixth guide staff 222 may guide so that the second lower elastic member 282 does not escape to the outside. One side of the second lower elastic member 282 may be in contact with an upper surface of the lower supporting member 270, and other side of the second lower elastic member 282 may be in contact with a lower surface of the sixth fixing member 206 positioned inside the second lower guide hole 221b of the upper supporting member 220. That is, the second lower elastic member 282 may be disposed between the upper supporting member 220 and the lower supporting member 270, and may maintain the second distance L2 between the upper supporting member 220 and the lower supporting member 270. Each of the first and second lower elastic members 281 and 282 may include a compression spring.

However, although the transferring structure 200 of the second invention includes two guide staffs and two lower elastic members, a configuration of the second invention is not limited thereto. For example, the transferring structure 200 may include at least four guide staff and at least four lower elastic members.

The lower supporting member 270 may be positioned under the upper supporting member 220. As illustrated in FIG. 23, the lower supporting member 270 may have a bar shape. As described above, the lower supporting member 270 may be spaced apart from the upper supporting member 220 by the second distance L2, and the second distance L2 may be maintained by the lower elastic member 280. Two grooves 270a may be formed in the lower supporting member 270, and the first distal end of the fifth and sixth guide staffs 221 and 222 each may be positioned in the two grooves (refer to FIG. 23). The lower supporting member 270 may be in contact with an upper surface of the tube 15 provided to the alignment structure 310. A lower surface of the lower supporting member 270 may be in contact with an upper surface of the tubes 15 each placed in the recess portion 325 of the alignment structure 310 in the first operation mode. In other words, the upper surface of the tubes 15 each may be supported by the lower surface of the lower supporting member 270. In this case, the tubes 20 may be transferred without a shake of the tubes 20 in a state where an interval of the tubes 20 is maintained while the transferring structure 200 gripping the tubes 20 is moved. The lower supporting member 270 may include plastic. In exemplary embodiments, the lower supporting member 270 may be manufactured using PEEK.

The connecting member 370 may be positioned between the upper supporting member 220 and the gripper 240. In other words, the connecting member 370 may be positioned between the first lower elastic member 281 and the second lower elastic member 282. The connecting member 370 may be fixed to the upper supporting member 220, and the gripper 240 may be connected to the connecting member 370. In other words, the shaft member 250, the upper supporting member 220, the connecting member 370, and the gripper 240 may be integrally moved in the first direction D1 or the second direction D2. The connecting member 370 may include a metal, an alloy, metal nitride, etc.

The gripper 240 may be positioned under the connecting member 370. The gripper 240 may be connected to the upper supporting member 220 through the connecting member 370, and may grip the tube 15 placed in the recess portion 325. The first gripper panel 241 may face the second gripper panel 242, and the lower supporting member 270 may be positioned between the first gripper panel 241 and the second gripper panel 242. When a distance between the first and second gripper panels 241 and 242 is decreased in the first operation mode, the gripper 240 may grip the tube 15. Otherwise, when the distance between the first and second gripper panels 241 and 242 is increased while the gripper 240 grips the tube 20 in the second operation mode (or the third operation mode), the tube 20 may be spaced apart from the gripper 240. The gripper 240 may grip the lid 27 of the tube 20. Alternatively, the gripper 240 may grip a side surface of the tube 20 located under a tube neck. The gripper 240 may include a metal, an alloy, metal nitride, etc.

Referring again to FIGS. 16 and 26, the storage 410 may be positioned spaced apart from the alignment structure 310. The storage 410 may include a lattice-shaped wall 420, and a plurality of spaces 415 are defined by the wall 420. When the transferring structure 200 is normally operated, the tube 20 transferred through the transferring structure 200 may be provided to the spaces 415 each (refer to FIGS. 19 to 36). The storage 410 may include plastic.

The discharge part 430 may be positioned spaced apart from the storage 410. When the transferring structure 200 is abnormally operated, the tube 20 transferred through the transferring structure 200 may be provided to the discharge part 430. The discharge part 430 may include a metal, an alloy, metal nitride, etc.

In exemplary embodiments, after the five tubes 15 placed in the recess portion 325 of the upper member 320 are spaced apart by the predetermined interval, the controller 300 may move the transferring structure 200 onto the upper member 320. After the transferring structure 200 is located on the upper member 320, the controller 300 may control the transferring structure 200 so that the transferring structure 200 operates in the first operation mode. For example, the transferring structure 200 may be descended in the second direction D2 in the first operation mode, and the lower supporting member 270 may be in contact with an upper surface of the five tubes 15 each. In this process, while the transferring structure 200 is descended, the lower supporting member 270 is pressurized from the five tubes 15, and then the lower supporting member 270 may be moved in the first direction D1 by the predetermined third distance L3. As the lower supporting member 270 is moved, the controller 300 may control the transferring structure 200 so that the five grippers 240 grip the five tubes 15 respectively in a state where the lower elastic member 280 is compressed. Here, the third distance L3 may be less than the second distance L2. After the transferring structure 200 grips the five tubes 20, the transferring structure 200 may be elevated in the first direction D1, and the transferring structure 200 together with the five tubes 20 may be moved onto the storage 410.

In addition, in exemplary embodiments, after the transferring structure 200 is located on the storage 410, the controller 300 may control the transferring structure 200 so that the transferring structure 200 operates in the second operation mode. For example, the transferring structure 200 may be descended in the second direction D2 in the second operation mode, and the controller 300 may control the transferring structure 200 so that the gripper 240 is spaced apart from the five tubes 20 while a lower surface of the tubes 20 each is spaced apart from a lower surface of the storage 410 by a fifth distance. In this process, as the compressed lower elastic member 280 is restored by elastic force, the lower supporting member 270 may be moved in the second direction D2 by the third distance L3, and the five tubes 20 may be provided (or released) to the storage 410 by being pressurized from the lower supporting member 270. Here, the fifth distance may be the same as or greater than the third distance L3.

Further, in exemplary embodiments, when the upper supporting member 220 is moved in the first direction D1 while the transferring structure 200 is descended in the second direction D2 in the second operation mode, the controller 300 may control the transferring structure 200 so that the transferring structure 200 operates in the third operation mode where the five tubes 20 are provided to discharge part 430. For example, in a manufacturing process of the storage 410, an interval of the wall 420 may be uneven due to the manufacturing defects, and the five tubes 205 may be gripped in an uneven interval from each other while the transferring structure 200 grips the five tubes 15. In this case, while the transferring structure 200 is descended in the second direction D2 on the storage 410 by the controller 300 in the second operation mode, an upper surface of the wall 420 of the storage 410 may be in contact with at least one tube 20 among the five tubes 20, and the upper supporting member 220 may be moved in the first direction D1 by the fourth distance L4 by being pressurized from the wall 420. In other words, when the tube 20 is pressurized from the wall 420, a force pressurized to the tube 20 may be transmitted to the gripper 240 gripping the tube 20, the connecting member 370 connected to the gripper 240, and the upper supporting member 220 connected to the connecting member 370 because the gripper 240, the lower supporting member 270, and the upper supporting member 220 are connected to each other and integrally moved, and then the upper supporting member 220 may be moved in the first direction D1. In this process, as the upper supporting member 220 is moved, the upper elastic member 230 is compressed, and then the shaft member 250 may be moved in the first direction D1. The first detecting sensor 260 detects the side surface of the shaft member 250, and may generate the side detecting signal SS2. The side detecting signal SS2 may be transmitted to the controller 300. When the controller 300 receives the side detecting signal SS2, the controller 300 may detect the abnormal operation of the transferring structure 200, and the controller 300 may operate the transferring structure 200 in the third operation mode based on the second signal S2 so that the transferring structure 200 provides the five tubes 20 to the discharge part 430.

The controller 300 may generate the first signal S1 based on the detecting signal SS1, and may generate the second signal S2 based on the side surface detecting signal SS2. In addition, the controller 300 may control the alignment structure 310 and the transferring structure 200 based on the first and second signals S1 and S2. In exemplary embodiments, the controller 300 may move the upper member 320 to the fourth direction D4 based on the first signal S1, and the controller 300 may operate the transferring structure 200 in the third operation mode based on the second signal S2. In other words, the controller 300 may control the operation of alignment structure 310 and the transferring structure 200 each. Alternately, the controller 300 may control an operation of the stopper 450 and the delivering member 490 each.

In addition, in exemplary embodiments, when the transferring structure 200 is descended, the controller 300 may detect whether the transferring structure 200 is abnormally operated. For example, when the first distance L1 between the body 210 and the upper supporting member 220 is maintained while the transferring structure 200 is descended, the controller 300 may determine that an operation of the transferring structure 200 is normal. In this case, the tube 20 moved through the transferring structure 200 may be provided to the storage 410. Otherwise, when the first distance L1 between the body 210 and the upper supporting member 220 is decreased while the transferring structure 200 is descended, the controller 300 may determine that an operation of the transferring structure 200 is abnormal. In this case, the tube 20 moved through the transferring structure 200 may be provided to the discharge part 430.

As the apparatus 1000 according to exemplary embodiments of the second invention includes the controller 300 and the transferring structure 200, the apparatus 1000 may detect that the operation of the transferring structure 200 is abnormal. Accordingly, the storage 410 may not be deformed by a descending force of the transferring structure 200, and the tube 20 may not be damaged. The tube 20 may not be lost to the outside of the storage 410.

In addition, when the transferring structure 200 is abnormally operated, the transferring structure 200 may be operated in the third operation mode through the controller 300. In this case, although the transferring structure 200 is abnormally operated, the transferring structure 200 may grip the tubes 15 placed in the recess portion 325 of the alignment structure 310 after the tubes 20 gripped by the gripper 240 is released to the discharge part 430. Accordingly, an automated production system may be implemented without stopping a process through the apparatus 1000.

In addition, as the apparatus 1000 includes the alignment structure 310, the tubes 15 may be spaced apart by the predetermined interval through the guider 330 of the alignment structure 310, and may be accurately provided to the spaces 415 of the storage 410.

Further, as the apparatus 1000 includes the lower supporting member 270, an upper surface of the tubes 15 each placed in the recess portion 325 of the alignment structure 310 may be supported from a lower surface of the lower supporting member 270. Accordingly, the tubes 20 may be transferred without a shake of the tube 20 in a state where an interval of the tubes 20 is maintained while the transferring structure 200 is moved.

FIG. 28 is a flow chart illustrating a method of transferring a tube of the apparatus according to exemplary embodiments of the second invention, and FIGS. 29, 30, 31, 32, 33, 34, 35, 36, and 37 are schematic diagrams for describing the method of transferring the tube of the apparatus of FIG. 28.

Referring to FIG. 28, a method of transferring a tube of the apparatus 1000 (refer to as 'method' hereinafter) may include a step S810 of feeding tubes through a conveyor 110, a step S820 of aligning the tubes through an alignment structure 310, a step S830 of transferring the tubes through a transferring structure 200, a step S840 of detecting whether operating abnormally when the transferring structure 200 is descended, a step S850 of providing the tubes to a discharge part 430, and a step S860 of providing the tubes to a storage 410.

Referring to FIGS. 28 and 29, the tubes 10 may be fed in a third direction D3 through the conveyor 110. The tubes 10 provided to an input portion of the conveyor 110 may be fed to a release portion of the conveyor 110 along the third direction D3. The tubes 10 may be collected to the release portion of the conveyor 110 in a closed state of a stopper 450 and a backward state of the delivering member 490.

Referring to FIGS. 28, 30, and 31, after five second detecting sensors 470 detect presence of the five tubes 10 each located adjacent to the release portion of the conveyor 110, the stopper 450 may be changed to open state, and a delivering member 490 may be changed to a forward state to be in contact with the tube 10, which is located furthest from the stopper 450, among the five tubes 10. As the delivering member 490 is moved in the third direction D3 in the open state of the stopper 450 after the delivering member 490 is in contact with the tube 10 that is located furthest from the stopper 450, the five tubes 10 may be provided to a recess portion 325 of an upper member 320 included the alignment structure 310. In this case, the upper member 320 may be located at a first position.

Referring to FIGS. 26, 28, 32, and 33, after the five tubes 15 is provided to the recess portion 325 of the upper member 320, a third detecting sensor 350 may detect the tube 15, which is closest to the third detecting sensor 350, among the five tubes 15 in the recess portion 325 in the closed state of the stopper 450 and the backward state of the delivering member 490, and the third detecting sensor 350 may transmit a detecting signal SS1 to a controller 300. When the controller 300 receives the detecting signal SS1, the controller 300 may move the upper member 320 in a fourth direction D4 based a first signal S1. In this case, the upper member 320 may be located at a second position. In this process, the five tubes 15 each may be located in five empty spaces defined from six protrusions included in a guider 330. In this case, the five tubes 15 may be arranged in the third direction D3 so that the five tubes 15 are spaced apart from each other by a width length of the protrusions each.

Referring to FIGS. 19, 20, 26, 28, and 34, after the five tubes 15 placed in the recess portion 325 of the upper member 320 is spaced apart by the predetermined interval, the controller 300 may move the transferring structure 200 onto the upper member 320.

After the transferring structure 200 is located on the upper member 320, the controller 300 may control the transferring structure 200 so that the transferring structure 200 operates in a first operation mode. For example, the transferring structure 200 may be descended in a second direction D2 in the first operation mode, and a lower supporting member 270 may be in contact with an upper surface of the five tubes 15 each. In this process, while the transferring structure 200 is descended, the lower supporting member 270 is pressurized from the five tubes 15, and then the lower supporting member 270 may be moved in the first direction D1 by a predetermined third distance L3. As the lower supporting member 270 is moved, the controller 300 may control the transferring structure 200 so that five grippers 240 grip the five tubes 15 respectively in a state where a lower elastic member 280 is compressed. After the transferring structure 200 grips the five tubes 20, the transferring structure 200 may be elevated in the first direction D1, and the transferring structure 200 together with the five tubes 20 may be moved onto the storage 410. While the transferring structure 200 is moved onto the storage 410 by gripping the five tubes 20 located in the alignment structure 310, the lower supporting member 270 may support an upper surface of the five tubes 20 each in a state where the lower elastic member 280 is compressed so that the five tubes 20 are not shaken.

Referring to FIGS. 26, 28, and 35, when the transferring structure 200 is normally operated after the transferring structure 200 is located on the storage 410, the controller 300 may control the transferring structure 200 so that the transferring structure 200 is operated in a second operation mode. For example, the transferring structure 200 may be descended in the second direction D2 in the second operation mode, and the controller 300 may control the transferring structure 200 so that the gripper 240 is spaced apart from the five tubes 20 while a lower surface of the tubes 20 each is spaced apart from a lower surface of the storage 410 by a fifth distance. In this process, as the compressed lower elastic member 280 is restored by elastic force, the lower supporting member 270 may be moved in the second direction D2 by the third distance L3, and the five tubes 20 may be provided to the storage 410 by being pressurized from the lower supporting member 270. Here, the fifth distance may be the same as or greater than the third distance L3. After the transferring structure 200 provide the five tubes 20 to the storage 410, the transferring structure 200 may be moved onto the alignment structure 310, and the apparatus 1000 may repeatedly perform the method.

Referring to FIGS. 26, 28, 36, and 37, otherwise when the transferring structure 200 is abnormally operated while the transferring structure 200 is descended in the second direction D2 in the second operation mode, the controller 300 may control the transferring structure 200 so that the transferring structure 200 operates in a third operation mode. For example, while the transferring structure 200 is descended in the second direction D2 in the second operation mode, an upper surface of a wall 420 of the storage 410 may be in contact with at least one tube 20 among the five tubes 20, and the upper supporting member 220 may be moved in the first direction D1 by a fourth distance L4 by being pressurized from the wall 420 (refer to FIGS. 37a and 37b). In this process, as the upper supporting member 220 is moved, an upper elastic member 230 is compressed, and then a shaft member 250 may be moved in the first direction D1. A first detecting sensor 260 detects a side surface of the shaft member 250, and may generate a side detecting signal SS2. The side detecting signal SS2 may be transmitted to the controller 300. When the controller 300 receives the side detecting signal SS2, the controller 300 may detect the abnormal operation of the transferring structure 200, and the controller 300 based on the second signal S2 so that the transferring structure 200 provides the five tubes 20 to the discharge part 430. After the transferring structure 200 provides the five tubes 20 to the discharge part 430, the transferring structure 200 may be moved onto the alignment structure 310, and the apparatus 1000 may repeatedly perform the method.

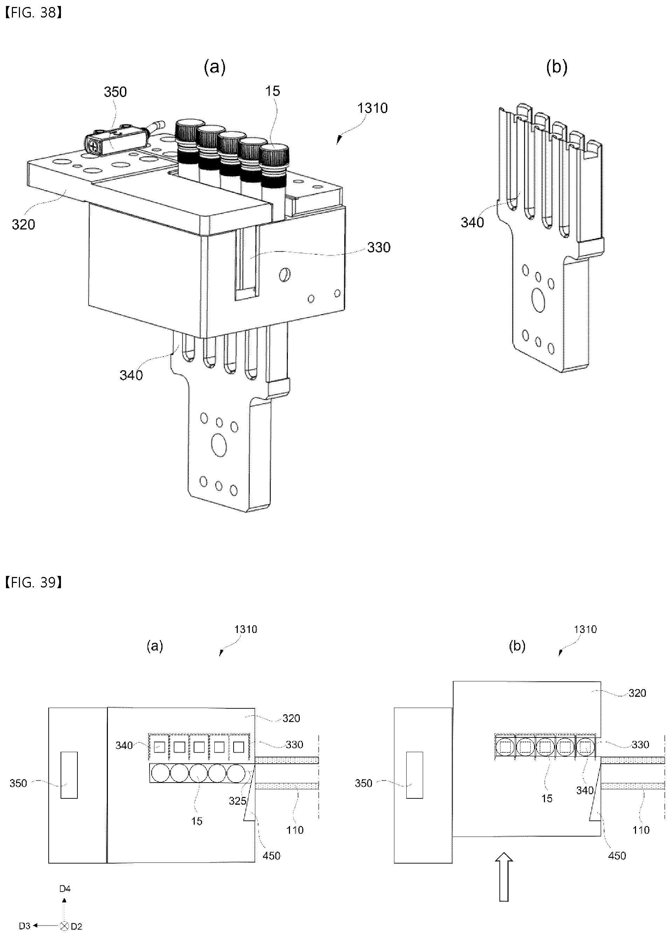

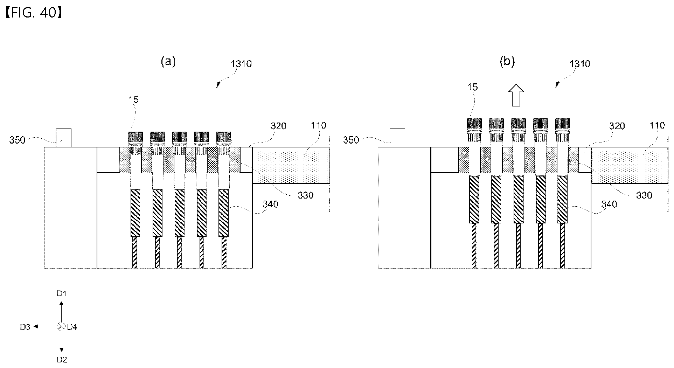

FIG. 38 is a perspective view illustrating an apparatus for transferring a tube according to exemplary embodiments of a second invention, and FIGS. 39 and 40 are schematic diagrams for describing an operation of an alignment structure of FIG. 38. An apparatus for transferring a tube shown in FIGS. 38, 39, and 40 may have a configuration that is substantially identical or similar to the apparatus 1000 described with reference to FIGS. 16 to 27 except for an alignment structure 1310 including an elevating member 340. In FIGS. 38, 39, and 40, redundant descriptions of components that are substantially identical or similar to the components described with reference to FIGS. 16 to 27 will be omitted. For example, FIG. 39 is an upper view for describing an operation of the alignment structure, and FIG. 40 is a cross-sectional view for describing the alignment structure.

Referring to FIGS. 16, 38, 39, and 40, an apparatus for transferring a tube (refer to as 'apparatus' hereinafter) may include the transferring structure 200, the controller 300, an alignment structure 1310, the storage 410, the discharge part 430, the stopper 450, the second detecting sensors 470, the third detecting sensor 350, the delivering member 490, etc. Here, the alignment structure 1310 may include an elevating member 340, an upper member 320, and a guider 330, and a recess portion 325 where a tube fed from the conveyor 110 is placeable may be formed in the upper member 320.

The alignment structure 1310 may be disposed adjacent to the release portion of the conveyor 110. The alignment structure 1310 may align the tubes 15 provided from the conveyor 110 through the elevating member 340, the upper member 320, and the guider 330.

The upper member 320 may be disposed under the stopper 450, and the recess portion 325 of the upper member 320 may face the release portion of the conveyor 110. The recess portion 325 may have a shape recessed from a side surface of the upper member 320 into an inner side of the upper member 320. For example, the recess portion 325 may have an opened shape in a portion that faces the release portion of the conveyor 110, and the at least three tubes 10 located adjacent to the release portion of the conveyor 110 may be provided to the recess portion 325 through the opened portion. After the at least three tubes 10 are provided to the recess portion 325, the upper member 320 together with the at least three tubes 15 placed in the recess portion 325 may be moved in the fourth direction D4 (e.g., the forward direction). That is, the upper member 320 is movable in the fourth direction D4 and a direction (the backward direction) opposite to the fourth direction D4 under the stopper 450.

The guider 330 may be disposed under the upper member 320, and the guider 330 may be disposed between adjacent two tubes 15 among the tubes 15 so that the tubes 15 are arranged spaced apart from each other by a predetermined distance. For example, the at least three tubes 10 released from the release portion of the conveyor 110 may be placed in the recess portion 325 of the upper member 320 by the delivering member 490, and the at least three tubes 15 placed in the recess portion 325 may be located adjacent to each other (or be in contact with each other). After the at least three tubes 15 are placed in the recess portion 325 of the upper member 320, the upper member 320 together with the at least three tubes 15 may be moved in the fourth direction D4. In this process, as the guider 330 is disposed between the tubes 15, the tubes 15 may be spaced apart from each other by the predetermined distance. In other words, the guider 330 may include first to n-th protrusions, where n is an integer more than 1, and one tube 15 may be disposed between k-th and (k+1)th protrusions among the first to n-th protrusions, where k is an integer between 1 and n.

The elevating member 340 may be disposed under the guider 330, and may elevate the tubes 15 spaced apart from each other by the predetermined distance. For example,
after the tubes 15 are spaced apart from each other by the predetermined through the guider 330, the elevating member 340 may be elevated in the first direction D1 by being in contact with a lower surface of the tubes 15 each. The elevating member 340 may include a metal, an alloy, metal nitride, etc.

In exemplary embodiments, five tubes 10 located adjacent to the release portion of the conveyor 110 may be placed in the recess portion 325 by being released through the delivering member 490, and the five tubes 15 (e.g., the lid 27 of the five tubes 15 each) placed in the recess portion 325 may be located adjacent to each other (or be in contact with each other) (refer to FIG. 39a). The five tubes 15 placed in the recess portion 325 together with the upper member 320 may be moved in the fourth direction D4 (refer to FIG. 39b). The guider 330 may have six protrusions, and five empty spaces may be defined by the six protrusions. As the five tubes 15 placed in the recess portion 325 are moved in the fourth direction D4, the five tubes 15 may be placed in the five empty spaces, respectively. In this case, the five tubes 15 may be arranged in the third direction D3 so that the five tubes 15 (e.g., the lid 27 of the five tubes 15 each) are spaced apart from each other by a width length of the protrusions each. After the five tubes 15 are located in the empty spaces, respectively, the elevating member 340 may be in contact with a lower surface of the five tubes 15 each (refer to FIG. 39a). After the elevating member 340 is in contact with the lower surface of the five tubes 15 each, the elevating member 340 may be moved in the first direction D1 (refer to FIG. 39b). As the elevating member 340 is moved in the first direction D1, a part of a side surface of the five tubes 15 each may be exposed on an upper surface of the upper member 320. In exemplary embodiments, the gripper 240 included in the gripper 240 may grip the side surface of the five tubes 15 each.

As the apparatus according to exemplary embodiments of the second invention includes the elevating member 340, the gripper 240 included in the transferring structure 200 may grip a side surface of the tube 15. Accordingly, as the tube 15 is more firmly gripped by the gripper 240, the tubes 20 may be transferred without a shake of the tube 20 in a state where an interval of the tubes 20 is maintained while the transferring structure 200 is moved.

As described above, the apparatus 100 disclosed in the first invention and the apparatus 1000 disclosed in the second invention may be included in an automated production system. For example, the automated production system may include a plurality of automated facilities, and the automated facility may include an apparatus for feeding a tube, an apparatus for feeding a lid, an apparatus for dispensing a solution, an apparatus for capping a lid, an apparatus for labelling a tube, etc.

Although the first and second inventions have been described with reference to exemplary embodiments thereof, it will be understood by those skilled in the art that various modifications and changes may be made therein without departing from the spirit and scope of the first and second inventions as set forth in the claims below.

The first invention may be applied to various automated facilities capable of being equipped with an apparatus for transferring a tube which feeds a tube. For example, it may be applied to automated facilities that feed the tube to conveyors located at different levels.

The second invention may be applied to various automated facilities capable of being equipped with an apparatus for transferring a tube which transfers a tube. For example, it may be applied to automated facilities that transfer tube from a conveyor to a storage.

### <Explanation of symbols>

### <First invention>

| | | | |
|---|---|---|---|
| 10, 15, 20: | tube | 25: | protrusion |
| 100: | apparatus | 110: | first conveyor |
| 130: | second conveyor | 135: | roller |
| 200: | sliding structure | 205: | guiding body |
| 210: | first guiding body | 211: | first supporting portion |
| 220: | second guiding body | 221: | second supporting portion |
| 230: | first detecting sensor | 240: | second detecting sensor |
| 250: | first stopper | 255: | first sub-stopper |
| 257: | first connecting portion | 260: | second stopper |
| 265: | second sub-stopper | 267: | second connecting portion |
| 270: | delivering member | 275: | opening |
| 290: | push member | 300: | controller |
| 310: | third stopper | 330: | third detecting sensor |
| 350: | fourth detecting sensor | 370: | fifth detecting sensor |
| 450: | first blocking member | 460: | second blocking member |

### <Second invention>

| | | | |
|---|---|---|---|
| 10, 15, 20: | tube | 22: | body |
| 25: | protrusion | 27: | lid |
| 1000: | apparatus | 110: | conveyor |
| 200: | transferring structure | 210: | body |
| 201, 202, 203, 204, 205,206: | first to sixth fixing members | | |
| 211a, 212a, 211b, | first to fourth upper guide hole | | |
| 213, 214, 215, 216, 221, 222: | first to sixth guide staffs | | |
| 220: | upper supporting member | 221a: | first lower guide hole |
| 221b: | second lower guide hole | 230: | upper elastic member |
| 231, 232, 233, 234: | first to fourth upper elastic member | | |
| 240: | gripper | 241: | first gripper panel |
| 242: | second gripper panel | 250: | shaft member |
| 255: | circumferential groove | 260: | first detecting sensor |
| 270: | lower supporting member | 280: | lower elastic member |
| 281: | first lower elastic member | 282: | second lower elastic member |
| 290: | protruding member | 300: | controller |
| 310, 1310: | alignment structure | 320: | upper member |
| 325: | opening | 330: | guider |
| 340: | elevating member | 350: | third detecting sensor |
| 370: | connecting member | 410: | storage |
| 415: | space | 420: | wall |
| 430: | discharge par | 450: | stopper |
| 470: | second detecting sensors | 490: | delivering member |

## Claims

1. An apparatus for transferring a tube, the apparatus comprising:
a first conveyor where a tube is transferred;
a second conveyor located at a lower level than the first conveyor; and
a sliding structure including:
a guiding body positioned between the first conveyor and the second conveyor, the guiding body guiding the tube provided in the first conveyor so that the tube is slid down; and
a controller configured to control so that the tube that is slid down is selectively provided to the second conveyor.

2. The apparatus of claim 1, wherein the guiding body includes:
a first guiding body where a first supporting portion having a predetermined curvature is formed; and
a second guiding body disposed spacing apart from the first guiding body, the second guiding body where a second supporting portion having the predetermined curvature is formed, and
wherein the tube is slid down through a space spaced apart between the first guiding body and the second guiding body while the tube is supported by the first and second supporting portions.

3. The apparatus of claim 2, wherein the tube is a cylindrical tube, and the tube includes a protrusion formed on a side, and
wherein the tube is slid down while the protrusion is in contact with the first and second supporting portions.

4. The apparatus of claim 1, wherein the sliding structure further includes:
a first stopper disposed adjacent to a first position of the guiding body, the first stopper being configured to operate in a closed state and an open state based on a first signal.

5. The apparatus of claim 4, wherein when the first stopper is the closed state, the first stopper supports the slid-down tube located at the first position so that the slid-down tube located at the first position is not provided to the second conveyor, and
wherein when the first stopper is the open state, the first stopper is spaced apart from the slid-down tube located at the first position so that the slid-down tube located at the first position is provided to the second conveyor through a release portion of the guiding body.

6. The apparatus of claim 4, wherein the sliding structure further includes:
a first sub-stopper positioned adjacent to the first stopper, the first sub-stopper operating in synchronization with the first stopper, and
wherein the first stopper supports an upper portion of the slid-down tube located at the first position, and the first sub-stopper supports a lower portion of the slid-down tube located at the first position.

7. The apparatus of claim 4, wherein the sliding structure further includes:
a second stopper disposed adjacent to a second position of the guiding body, the second stopper being configured to operate in a closed state and an open state based on a second signal.

8. The apparatus of claim 7, wherein when the first stopper is the open state and is the closed state in a state where the slid-down tube located at the first position is placed, the second stopper is the closed state, and the second stopper supports the slid-down tube located at the second position so that the slid-down tube located at the second position is not provided to the first position, and
wherein when the first stopper is the closed state in a state where the tube is not placed at the first position, the second stopper is the open state, and the second stopper is spaced apart from the sild down tube located at the second position so that the sild down tube located at the second position is provided to the first position.

9. The apparatus of claim 7, wherein the sliding structure further includes:
a second sub-stopper positioned adjacent to the second stopper, the second sub-stopper operating in synchronization with the second stopper, and
wherein the second stopper supports an upper portion of the slid-down tube located at the second position, and the second sub-stopper supports a lower portion of the slid-down tube located at the second position.

10. The apparatus of claim 7, wherein the sliding structure further includes:
a first detecting sensor disposed at the first position, the first detecting sensor generating a first detecting signal by detecting presence or absence of the tube located at the first position; and
a second detecting sensor disposed at the second position, the second detecting sensor generating a second detecting signal by detecting presence or absence of the tube located at the second position, and
wherein the controller generates the first and second signals based on the first and second detecting signals.

11. The apparatus of claim 1, wherein an upper surface of the first conveyor facing a lower surface of the tube is parallel to a ground, and the upper surface of the second conveyor that is in contact with the tube is inclined at a predetermined angle with respect to the ground.

12. The apparatus of claim 11, wherein the upper surface of the first conveyor faces a lower surface of the tube so that the tube is stood, and the upper surface of the second conveyor is in contact with a side surface of the tube so that the tube is inclined at a predetermined angle.

13. The apparatus of claim 1, further comprising:
a delivering member configured to move between a release portion of the first conveyor and an input portion of the guiding body, the delivering member moving the tube provided from the release portion of the first conveyor so that the tube provided from the release portion of the first conveyor is positioned in an input portion of the guiding body.

14. The apparatus of claim 13, wherein the delivering member includes an opening having a shape surrounding at least a part of the tube, and the delivering member transfers the tube placed in the opening from the release portion of the first conveyor to the input portion of the guiding body in a state where the tube provided from the release portion of the first conveyor is placed in the opening.

15. The apparatus of claim 14, further comprising:
a third stopper disposed adjacent to the release portion of the first conveyor on the first conveyor, the third stopper operating in a closed state and an open state.

16. The apparatus of claim 15, wherein when the tube is placed in the opening of the delivering member positioned in the release portion of the first conveyor, the third stopper is closed state, and
wherein when the tube is not placed in the opening of the delivering member positioned in the release portion of the first conveyor, the third stopper is the open state.

17. The apparatus of claim 15, further comprising:
a push member pushing the tube so that the tube placed in the input portion of the guiding body is slid down.

18. The apparatus of claim 15, further comprising:
a third detecting sensor disposed at a third position of the guiding body, the third detecting sensor generating a third detecting signal by detecting whether the tube is placed at a third position for a predetermined period of time or more,
wherein when the controller detects the third signal, the third stopper is maintained in the closed state.

19. The apparatus of claim 1, wherein the guiding body has a fan shape, and the tube is slid down along an arc of the fan shape.

20. The apparatus of claim 1, wherein a direction where the tube is moved in the first conveyor is different from a direction where the tube is moved in the second conveyor.

21. The apparatus of claim 1, wherein the second conveyor includes a plurality of rollers, and
wherein the tube released from the guiding body is provided between adjacent two rollers among the rollers.

22. An apparatus for transferring a tube, the apparatus comprising:
a first conveyor where a tube is transferred;
a second conveyor located at a lower level than the first conveyor; and
a sliding structure including:
a guiding body positioned between the first conveyor and the second conveyor, the guiding body guiding the tube provided in the first conveyor so that the tube is slid down;
a first stopper disposed adjacent to a first position of the guiding body, the first stopper being configured to operate in (i) a closed state that supports the tube placed at the first position of the guiding body and (ii) an open state that does not support the tube placed at the first position of the guiding body based on a first signal;
a first sub-stopper positioned adjacent to the first stopper, the first sub-stopper operating in the same manner as the first stopper;
a second stopper disposed adjacent to a second position of the guiding body, the second stopper being configured to operate in (i) a closed state that supports the tube placed at the second position of the guiding body and (ii) an open state that does not support the tube placed at the second position of the guiding body based on a second signal;
a second sub-stopper positioned adjacent to the second stopper, the second sub-stopper operating in the same manner as the second stopper; and
a controller configured to control so that the tube that is slid down is selectively provided to the second conveyor based on the first and second signals.
